# EUROPÄISCHE PATENTANMELDUNG

(11) **EP 3 959 978 A1**
(43) Veröffentlichungstag der Anmeldung: **02.03.2022**
(21) Anmeldenummer: 21197893.7
(22) Anmeldetag: 16.09.2019
(51) Int. Cl.: A01M 1/02, A01M 1/04, A01M 1/10, A01M 1/14

(54) **DETEKTION VON GLIEDERFÜSSERN**

(30) Priorität: 21.09.2018 EP 18195871; 30.04.2019 EP 19171993
(62) Teilanmeldung aus: 19766043.4
(71) Anmelder: Bayer AG, 51373 Leverkusen (DE)
(72) Erfinder: Göke, Dennis, 51067 Köln (DE); Wollenhaupt, Robert, 40764 Langenfeld (DE); Tempel, Matthias, 50935 Köln (DE)
(74) Vertreter: BIP Patents

(57) **Zusammenfassung**

Die vorliegende Erfindung befasst sich mit der Detektion von Gliederfüßern (Nützlingen und/oder Schädlingen) in einem Gebiet, in dem Pflanzen wachsen, mit Hilfe einer Kamera.

## Beschreibung

Die vorliegende Erfindung befasst sich mit der Detektion von Gliederfüßern (Nützlingen und/oder Schädlingen) in einem Gebiet, in dem Pflanzen wachsen, mit Hilfe einer Kamera.

Etwa zwei Drittel der gegenwärtig bekannten Tierarten gehören zu den Gliederfüßern (Stamm Arthropoda), die zu 85% von Insekten repräsentiert werden. Ein erheblicher Anteil der Arthropoden ist phytophag: diese Tiere ernähren sich von Pflanzen und können zur Beeinträchtigung des Wachstums führen, Saug- und Fraßschäden verursachen sowie Viruskrankheiten übertragen. Auf diese Weise werden beispielsweise erhebliche Ertrags- und Qualitätsverluste beim Anbau von Kulturpflanzen verursacht.

Neben diesen Schädlingen gibt es Gliederfüßer, die beim Anbau von Kulturpflanzen nützlich sind. Solche Nützlinge können natürliche Gegenspieler von Schädlingen sein, indem sie die Bestände von Schädlingen dezimieren oder deren weitere Vermehrung verhindern, weil die Schädlinge ihnen oder ihren Nachkommen als Nahrung dienen. Andere Nützlinge sind essentiell für die Fortpflanzung von Pflanzen: vor allem Bienen, Hummeln, Fliegen und Schmetterlinge nehmen auf der Suche nach Nektar Pollen von einer Blüte auf, übertragen diesen auf benachbarte Blüten und sorgen damit für eine Befruchtung.

In der modernen Landwirtschaft spielt die Erfassung und Erkennung von Nützlingen und/oder Schädlingen innerhalb von landwirtschaftlich genutzten Flächen eine wichtige Rolle.

Zur Befallskontrolle in Bezug auf Schädlinge werden häufig beleimte Farbtafeln oder Gelbfangschalen verwendet. Viele Schädlinge wie beispielsweise Rapsschädlinge werden von der gelben Farbe der Schale oder Tafel angelockt. Die Gelbfangschale ist mit Wasser gefüllt, dem ein Tensid beigefügt werden kann, um die Oberflächenspannung zu erniedrigen, so dass angelockte Schädlinge ertrinken. Im Fall einer beleimten Tafel bleiben die Schädlinge am Leim kleben. Die Fallen werden regelmäßig kontrolliert. Durch Zählen der in einer Falle befindlichen Schädlinge lassen sich Schadschwellen ermitteln. Das Auszählen ist jedoch mühsam und fehleranfällig.

In WO2018/054767 wird ein System umfassend eine Falle für Schadorganismen, ein Smartphone und einen Server offenbart. Ein Landwirt kann mit dem Smartphone digitale Bildaufnahmen von dem Falleninhalt erzeugen. Die Bildaufnahmen werden über ein Funknetzwerk auf einen Server übertragen und dort ausgewertet. Der Landwirt erhält eine Mitteilung von dem Server über die Anzahl und die Art der gefangenen Schadorganismen. Nachteilig an dem in WO2018/054767 offenbarten System ist, dass Fallen von einem Menschen aufgesucht werden müssen, um eine Befallskontrolle durchführen zu können.

KR1020100127473 offenbart ein System umfassend eine Falle, die mit Hilfe eines Lockstoffs (Pheromons) Insekten anlockt, eine Kamera, die Bildaufnahmen von den in der Falle befindlichen Insekten erzeugt, eine Sendeeinheit zur Übertragung der Bildaufnahmen per Funk auf eine Analyseeinheit und die Analyseeinheit zur Analyse der Bildaufnahmen. Die Falle kann somit aus der Ferne kontrolliert werden. Die Falle ist mit einer Klebeschicht ausgestattet, um Insekten zu immobilisieren. Mit der Zeit sammeln sich mehr und mehr Insekten aber auch Schmutz auf dem Klebestreifen an, so dass die Falle von Zeit zu Zeit aufgesucht werden muss, um die Klebeschicht zu erneuern. Nachteilig ist ferner, dass in eine solche Falle auch Nützlinge gelangen können, die darin verenden.

Aus landwirtschaftlicher Sicht ist nicht nur die Befallsdichte mit Schädlingen von Bedeutung sondern auch die Anwesenheit von Nützlingen, denen Schädlinge als Nahrungsquelle oder Wirt dienen, oder die aus anderen Gründen für eine erfolgreiche Ernte von Bedeutung sind (z.B. Bestäuber). Es ist beispielsweise denkbar, dass die Befallsdichte zwar hoch ist, den Schädlingen aber eine ausreichende Zahl an Nützlingen gegenübersteht, die eine weitere Vermehrung und/oder Ausbreitung der Schädlinge verhindert. Es ist also denkbar, dass die Zahl einer bestimmten Schädlingsart in einem Bereich allein keine Aussage darüber erlaubt, ob von dem Schädling eine Bedrohung für die Ernte ausgeht. Ist gleichzeitig eine ausreichend große Zahl an Nützlingen vorhanden, die den Schädlingen Einhalt gebietet, ist das Risiko eines Ernteverlusts als gering einzustufen. Es ist denkbar, dass in einem solchen Fall keine Maßnahmen gegen die Schädlinge ergriffen werden sollten, denn einige Maßnahmen (zum Beispiel die Applikation von Insektiziden) können auch negative Begleiterscheinungen haben (z.B. Resistenzbildung, phytotoxische Eigenschaften, Bekämpfung von Nützlingen).

Auch der Zustand der angebauten Pflanzen kann entscheidend sein, ob bei einer gegebenen Befallsdichte ein Ernteverlust droht oder nicht, denn kranke oder geschwächte Pflanzen werden eher durch Schädlinge geschädigt als gesunde Pflanzen.

Diesen Problemen widmet sich die vorliegende Erfindung.

Mit Hilfe der vorliegenden Erfindung kann die Anwesenheit von Schädlingen und/oder Nützlingen in einem Gebiet bestimmt werden.

Unter einem "Schädling" wird vorzugsweise ein Gliederfüßer verstanden, der beim Anbau von Kulturpflanzen in Erscheinung treten und die Kulturpflanze schädigen, oder die Ernte der Kulturpflanze negativ beeinflussen kann.

Vorzugsweise handelt es sich um einen tierischen Schädling aus der Gruppe der Insekten (in den verschiedenen Stadien von Larve (Raupe, Afterraupe) bis zum Adultstadium) oder Spinnentiere. Besonders bevorzugt handelt es sich bei dem Schädling um einen Agrarschädling wie beispielsweise Apfelwickler, Blattlaus, Fransenflügler, Fruchtschalenwickler, Kartoffelkäfer, Kirschfruchtfliege, Maikäfer, Maiszünsler, Pflaumenwickler, Rhododendron-Zikade, Saateule, Schildlaus, Schwammspinner, Spinnmilbe, Traubenwickler, Walnussfruchtfliege, Weiße Fliege, Großer Rapsstengelrüssler, Gefleckter Kohltriebrüssler, Rapsglanzkäfer, Kohlschotenrüssler, Kohlschotenmücke oder Rapserdfloh, oder um einen Forstschädling wie beispielsweise Blattlaus, Blauer Kiefernprachtkäfer, Borkenkäfer, Eichenprachtkäfer, Eichen-Prozessionsspinner, Eichenwickler, Fichtengespinstblattwespe, Gemeiner Holzwurm, Großer Brauner Rindenfresser, Kiefernbuschhornblattwespe, Kieferneule, Kiefernspanner, Kleine Fichtenblattwespe, Nonne, Rosskastanienminiermotte, Schwammspinner oder Splintholzkäfer.

Unter dem Begriff "Kulturpflanze" wird eine Pflanze verstanden, die durch das Eingreifen der Menschen zielgerichtet als Nutz- oder Zierpflanze angebaut wird.

Unter einem "Nützling" wird vorzugsweise ein Gliederfüßer verstanden, dem ein Schädling als Nahrungsquelle oder Wirt dient oder der aus anderen Gründen für eine erfolgreiche Ernte von Bedeutung ist (z.B. als Bestäuber). Vorzugsweise handelt es sich bei dem Nützling um ein Insekt (in den verschiedenen Stadien von Larve (Raupe, Afterraupe) bis zum Adultstadium) oder ein Spinnentier. Ganz besonders bevorzugte handelt es sich um einen Bestäuber (Pollenspender) wie beispielsweise eine Biene, Hummel, Fliege oder ein Schmetterling oder um ein Gliederfüßer, dem ein Schädling als Nahrungsquelle dient wie beispielsweise eine Schlupfwespen oder ein Marienkäfer.

Schädlinge und Nützlinge werden in dieser Beschreibung zusammenfassend auch als Gliederfüßer (lat. Arthropoda) bezeichnet. Der Begriff "Gliederfüßer" kann also die Bedeutung "Schädlinge" haben, er kann die Bedeutung "Nützlinge" haben, er kann die Bedeutung "Schädlinge oder Nützlinge" haben und er kann die Bedeutung "Schädlinge und Nützlinge" haben. Der Begriff (spezifischer) Gliederfüßer kann die Bedeutung Gliederfüßer oder die Bedeutung spezifischer Gliederfüßer haben; dies gilt analog auch für die Begriffe (spezifischer) Schädling, (spezifischer) Nützling und (spezifisches) Bekämpfungsmittel.

Unter einem "Gebiet" wird ein räumlich abgrenzbarer Bereich der Erdoberfläche verstanden, auf dem Pflanzen wachsen. Vorzugsweise wird das Gebiet zumindest anteilig landwirtschaftlich genutzt, indem auf einem oder mehreren Feldern Kulturpflanzen angepflanzt, mit Nährstoffen versorgt und geerntet werden. Das Gebiet kann auch ein forstwirtschaftlich genutzter Bereich der Erdoberfläche (z.B. ein Wald) sein oder einen solchen umfassen. Auch Gärten, Parkanlagen oder dergleichen, bei denen ein Pflanzenbestand lediglich zur Freude der Menschen existiert, fallen unter den Begriff Gebiet.

Vorzugsweise umfasst ein Gebiet eine Vielzahl an Feldern für Kulturpflanzen. In einer bevorzugten Ausführungsform entspricht ein Gebiet einem Anbaugebiet für eine Kulturpflanze (zur Definition eines Anbaugebietes siehe z.B. Journal für Kulturpflanzen, 61 (7). S. 247-253, 2009, ISSN 0027-7479). In einer anderen bevorzugten Ausführungsform entspricht ein Gebiet einem Boden-Klima-Raum (zur Definition eines Boden-Klima-Raumes siehe z.B. Nachrichtenbl. Deut. Pflanzenschutzd., 59(7), S. 155-161, 2007, ISSN 0027-7479).

Unter einem "Teilgebiet" wird ein vorzugsweise zusammenhängender Bereich innerhalb eines Gebietes verstanden. Vorzugsweise handelt es sich um ein oder mehrere Felder, in denen eine spezifische Kulturpflanze angebaut wird. Vorzugsweise wird das Teilgebiet von einem Landwirt bewirtschaftet, für den eine Mehrzahl an Bildaufnahmevorrichtungen und ggf. eine oder mehrere Pflanzenanalysevorrichtungen registriert sind. Die Ermittlung von Befallsdichten und Schadschwellen erfolgt vorzugsweise für ein Teilgebiet, insbesondere dann, wenn das Gebiet so groß ist, dass die für ein Teilgebiet ermittelte Befallsdichte eine Schadschwelle überschreitet und die für anderes Teilgebiet desselben Gebiets ermittelte Befallsdichte die Schadschwelle nicht überschreitet.

Beim Pflanzenschutz ist das Ermitteln von Schadschwellen aus ökologischer und wirtschaftlicher Sicht unabdingbar. Die Schadschwelle gibt die Befallsdichte mit Schädlingen an, ab denen eine Bekämpfung wirtschaftlich sinnvoll wird. Bis zu diesem Wert ist der wirtschaftliche Mehraufwand durch eine Bekämpfung größer als der zu befürchtende Ernteausfall. Übersteigt der Befall diesen Wert, werden die Bekämpfungskosten durch den zu erwartenden Mehrertrag zumindest ausgeglichen.

Je nach dem Wesen eines Schädlings oder einer Krankheit kann die Schadschwelle sehr unterschiedlich sein. Bei Schädlingen oder Krankheiten, die nur mit großem Aufwand und mit negativen Begleiterscheinungen für die weitere Produktion zu bekämpfen sind, kann die Schadschwelle sehr hoch sein. Kann jedoch schon ein geringer Befall zu einem Ausbreitungsherd werden, der die gesamte Produktion zu vernichten droht, kann die Schadschwelle sehr niedrig sein.

Zur Ermittlung der Anwesenheit von Schädlingen und/oder Nützlingen in einem Gebiet wird mindestens eine Bildaufnahmevorrichtung eingesetzt.

Ein erster Gegenstand der vorliegenden Erfindung ist eine Bildaufnahmevorrichtung umfassend
- einen Sammelbereich,
- eine Bildaufnahmeeinheit,
- eine Sendeeinheit und
- eine Steuereinheit
wobei die Steuereinheit konfiguriert ist,
▪ die Bildaufnahmeeinheit zu veranlassen, Bildaufnahmen von dem Sammelbereich zu erzeugen, und
▪ die Sendeeinheit zu veranlassen, die erzeugten Bildaufnahmen und/oder Informationen zu den erzeugten Bildaufnahmen über ein Netzwerk an ein Computersystem zu versenden.

Ein weiterer Gegenstand der vorliegenden Erfindung ist ein Verfahren umfassend die Schritte
- Aufstellen einer Bildaufnahmevorrichtung in einem Gebiet, wobei die Bildaufnahmevorrichtung
   ∘ einen Sammelbereich,
   ∘ eine Bildaufnahmeeinheit,
   ∘ eine Sendeeinheit und
   ∘ eine Steuereinheit
   umfasst,
- Erzeugen von Bildaufnahmen des Sammelbereichs,
- Übermitteln von Informationen betreffend die Bildaufnahmen an ein Computersystem,
- Analysieren der übermittelten Informationen und Generieren von Informationen zu den in dem Gebiet vorhandenen Schädlingen und/oder Nützlingen,
- Übermitteln der Informationen zu den in dem Gebiet vorhandenen Schädlingen und/oder Nützlingen an einen oder mehrere Nutzer.

Ein weiterer Gegenstand der vorliegenden Erfindung ist ein Computerprogrammprodukt umfassend ein Computerprogramm, das in einen Arbeitsspeicher eines Computers geladen werden kann und dort den Computer dazu veranlasst, folgende Schritte ausführen:
- Empfangen von Informationen mindestens einer Bildaufnahmevorrichtung in einem Gebiet, wobei die Informationen Bildaufnahmen betreffen, die von einem Sammelbereich der mindestens einen Bildaufnahmevorrichtung erzeugt worden sind,
- Analysieren der empfangenen Informationen und Generieren von Informationen zu den in dem Gebiet vorhandenen Schädlingen und/oder Nützlingen,
- Übermitteln der Informationen zu den in dem Gebiet vorhandenen Schädlingen und/oder Nützlingen an einen oder mehrere Nutzer.

Nachfolgend werden weitere Erfindungsgegenstände und bevorzugte Ausführungsformen vorgestellt. Zudem wird die Erfindung näher beschrieben. Bei dieser Vorstellung und dieser Beschreibung wird nicht zwischen den einzelnen Erfindungsgegenständen unterschieden. Die nachfolgenden Erläuterungen sollen vielmehr für alle Erfindungsgegenstände in analoger Weise gelten, unabhängig davon, in welchem Kontext (Bildaufnahmevorrichtung, System, Verfahren, Computerprogrammprodukt) sie erfolgen.

Der Sammelbereich ist ein Bereich, der von Gliederfüßern (Nützlingen und/oder Schädlingen) aufgesucht werden kann. Es kann sich dabei um eine ebene Oberfläche einer Tafel oder Karte oder dergleichen handeln. Es kann sich auch um den Boden eines Behälters handeln.

Es ist denkbar, dass eine erfindungsgemäße Bildaufnahmevorrichtung über mehrere Sammelbereiche verfügt. Es ist auch denkbar, dass eine erfindungsgemäße Bildaufnahmevorrichtung über verschiedene Sammelbereiche verfügt, zum Beispiel über einen Sammelbereich für (spezifische) Schädlinge und einen anderen Sammelbereich für (spezifische) Nützlinge.

Der Sammelbereich ist vorzugsweise eine ebene Fläche mit einem runden, ovalen, elliptischen, eckigen (dreieckig, viereckig, fünfeckig, sechseckig oder allgemein n-eckig, mit n als ganzer Zahl, die größer oder gleich drei ist) Querschnitt. Vorzugsweise ist der Querschnitt rund oder rechteckig (insbesondere quadratisch). Von der Fläche können sich Wandungen nach oben erstrecken, so dass sich ein Behälter ergibt. Der Behälter kann z.B. zylinderförmig, konusförmig oder kastenförmig ausgeführt sein. Vorzugsweise weist er einen runden Querschnitt auf und die Wandungen erstrecken sich vom Boden konusförmig nach oben, wobei Bodenfläche und Wandfläche vorzugsweise in einem Winkel von mehr als 90° und weniger als 120° zueinander verlaufen.

Der Sammelbereich kann Teil einer Fangvorrichtung für Schädlinge sein, wie beispielsweise einer Gelbfangschale oder einer optional beleimten Farbtafel.

Insbesondere dann, wenn der Sammelbereich durch den Boden eines Behälters gebildet wird, kann mindestens ein Ablauf vorzugsweise im Bodenbereich vorhanden sein, so dass beispielsweise Regenwasser, das in den Sammelbereich gelangt, über den mindestens einen Ablauf aus dem Sammelbereich abfließen kann. Bei dem Ablauf kann es sich um eine oder mehrere Öffnungen im Boden oder in einer Wand angrenzend an den Boden handeln. Es ist denkbar, dass an eine solche Öffnung eine Ablaufrinne angebracht ist, um das abfließende Wasser in eine definierte Richtung zu lenken. Für den Fall, dass der Sammelbereich Teil einer Fangschale ist, kann ein Überlauf vorhanden sein. Der Überlauf kann beispielsweise durch eine Aussparung in einer Seitenwand der Fangschale gebildet werden. Vorzugsweise grenzt an die Aussparung eine Rinne an, so dass Regenwasser gerichtet abfließen kann.

In einer bevorzugten Ausführungsform weist der Sammelbereich eine ebene Fläche auf, die so angeordnet ist, dass sie gegenüber dem Horizont eine Neigung aufweist, wenn die erfindungsgemäße Bildaufnahmevorrichtung in einem Gebiet auf einem Boden stationiert oder an einer Pflanze befestigt ist. Der Horizont verläuft senkrecht (im Winkel von 90°) zur Richtung der Schwerkraft. Die ebene Fläche ist also so angeordnet, dass sie und der Horizont einen Winkel einschließen, der größer als Null ist und maximal 90° beträgt. Vorzugsweise ist die ebene Fläche so angeordnet, dass sie und der Horizont einen Winkel im Bereich von 2° bis 88°, bevorzugt im Bereich von 5° bis 80°, noch mehr bevorzugt im Bereich von 10° bis 70° einschließen. Regen- oder Tauwasser kann so problemlos von der Fläche ablaufen.

Als Lockmittel kann der Sammelbereich in einer Farbe gestaltet sein (z.B. gelb oder rot), die spezifische Schädlinge und/oder Nützlinge anlockt. Neben oder anstelle einer Farbe können weitere/andere Mittel vorhanden sein, die Gliederfüßer anlocken (Lockmittel). Denkbar ist zum Beispiel die Verwendung eines Pheromons oder eines Duftstoffes, der z.B. eine Nahrungsquelle vortäuscht. Auch der Einsatz einer Quelle für elektromagnetische Strahlung im infraroten, sichtbaren und/oder ultravioletten Bereich zum Anlocken von (spezifischen) Gliederfüßern ist denkbar. Auch der Einsatz von Geräuschen, die beispielsweise paarungswillige Männchen und/oder Weibchen imitieren, ist denkbar. Auch der Einsatz von speziellen Mustern, die zum Beispiel eine Pflanze imitieren, ist denkbar.

Vorzugsweise werden ein oder mehrere Lockmittel verwendet, die zumindest über den Zeitraum zwischen Aufstellen der Bildaufnahmevorrichtung und einer ersten Wartung eine konstante Wirkung erzielen. Da eine Farbe, ein Muster, eine Form oder dergleichen als Lockmittel über einen solchen Zeitraum in der Regel konstant bleiben, haben sie einen Vorteil gegenüber einem Pheromon, das sich schnell verflüchtigen kann.

Im Falle der Verwendung einer Fangschale kann diese mit Wasser und gegebenenfalls mit einem oder mehreren Zusätzen gefüllt sein. Ein solcher Zusatz kann beispielsweise ein Tensid zur Erniedrigung der Oberflächenspannung sein. Ein solcher Zusatz kann auch ein Lockstoff zum Anlocken von (spezifischen) Gliederfüßern sein. Ein solcher Zusatz kann auch ein Mittel zur Verhinderung von Algenbildung (beispielsweise ein Herbizid) sein.

Im Falle einer Karte oder Tafel kann diese mit einem Klebstoff versehen sein, um Schädlinge bewegungsunfähig zu machen. Bei einem Sammelbereich für Nützlinge wird vorzugsweise auf einen Klebstoff oder andere Mittel, die den Nützlingen schaden könnten, verzichtet.

Vorzugsweise wird bei der erfindungsgemäßen Bildaufnahmevorrichtung auf jedwede Mittel zur Immobilisierung und/oder zum Fangen von Gliederfüßern verzichtet; das heißt, dass der Sammelbereich der Bildaufnahmevorrichtung vorzugsweise nicht mit einer Klebeschicht versehen ist und dass die Bildaufnahmevorrichtung vorzugsweise keine Flüssigkeit zum Fangen von Gliederfüßern aufweist.

In einer bevorzugten Ausführungsform umfasst die Bildaufnahmevorrichtung Mittel zur Reinigung des Sammelbereichs. Es ist denkbar, dass sich im Sammelbereich im Lauf der Zeit Schmutz ansammelt, der eine Identifizierung und Auszählung von Schädlingen und/oder Nützlingen erschwert. Es kann sich bei solchen Reinigungsmitteln beispielsweise um eine oder mehrere Düsen handeln, aus der Druckluft auf den Sammelbereich geblasen wird, um Schmutz fortzublasen. Es kann sich um eine oder mehrere Düsen handeln, aus der eine Flüssigkeit (z.B. Wasser ggf. mit einem oder mehreren Zusätzen wie beispielsweise einem Tensid) auf den Sammelbereich gesprüht werden kann, um Schmutz fortzuspülen. Es kann sich um einen Aktuator handeln, der die Oberfläche des Sammelbereichs zur Seite bewegt oder rotiert, damit Schmutz von der Oberfläche fällt. Es ist denkbar, dass es sich um einen Vibrationsmechanismus handelt, der den Sammelbereich hin und her und/oder auf und ab bewegt, um anhaftenden Schmutz zu lösen. Es ist denkbar, dass mehrere der genannten Mittel und/oder weitere Mittel miteinander kombiniert werden.

In einer bevorzugten Ausführungsform umfasst die erfindungsgemäße Bildaufnahmevorrichtung einen Behälter enthaltend ein Gas, mindestens eine Düse und Mittel zum Fördern des Gases aus dem Behälter in Richtung der mindestens einen Düse, wobei die mindestens eine Düse auf den Sammelbereich gerichtet ist. Das Gas kann in dem Behälter zum Beispiel unter einem Druck stehen und aufgrund eines Druckgefälles zwischen dem Behälterinneren und der Außenwelt aus dem Behälter getrieben werden. Vorzugsweise umfasst die Bildaufnahmevorrichtung ein Ventil, wobei das Ventil durch die Steuereinheit der Bildaufnahmevorrichtung ansteuerbar ist, und wobei die Steuereinheit konfiguriert ist, zu vordefinierten Zeitpunkten und/oder in vordefinierten Zeitabständen und/oder bei Eintritt eines Ereignisses das Ventil für eine vordefinierte Zeitspanne zu öffnen, so dass in der vordefinierten Zeitspanne Gas aus der mindestens einen Düse tritt und auf den Sammelbereich trifft. Als Gas kann zum Beispiel Luft oder Stickstoff verwendet werden.

In einer weiteren bevorzugten Ausführungsform umfasst die erfindungsgemäße Bildaufnahmevorrichtung einen Behälter mit einer Flüssigkeit, mindestens eine Düse und Mittel zum Fördern der Flüssigkeit aus dem Behälter in Richtung der mindestens einen Düse, wobei die mindestens eine Düse auf den Sammelbereich gerichtet ist. Bei den Mitteln zum Fördern der Flüssigkeit kann es sich zum Beispiel um eine elektrisch angetriebene Pumpe handeln. Vorzugsweise umfasst die Bildaufnahmevorrichtung ein Ventil, wobei das Ventil durch die Steuereinheit der Bildaufnahmevorrichtung ansteuerbar ist, und wobei die Steuereinheit konfiguriert ist, zu vordefinierten Zeitpunkten und/oder in vordefinierten Zeitabständen und/oder bei Eintritt eines Ereignisses das Ventil für eine vordefinierte Zeitspanne zu öffnen, so dass in der vordefinierten Zeitspanne Flüssigkeit aus der mindestens einen Düse tritt und auf den Sammelbereich trifft. Als Flüssigkeit wird vorzugsweise Wasser und/oder Ethanol verwendet. Ein Tensid kann der Flüssigkeit zugesetzt werden, um den Reinigungseffekt zu vergrößern.

In einer bevorzugten Ausführungsform umfasst die erfindungsgemäße Bildaufnahmevorrichtung einen Vibrationsantrieb. Bei Aktivieren des Vibrationsantriebs setzt der Vibrationsantriebs den Sammelbereich für eine vordefinierte Zeitspanne in eine Schwingung (zum Beispiel eine Hin- und Herbewegung und/oder Auf- und Abbewegung) vorzugsweise mit einer vordefinierten Frequenz beispielsweise im Bereich von 5 bis 1000 Schwingungen pro Sekunde. Vorzugsweise ist der Vibrationsantrieb mit der Steuereinheit verbunden und die Steuereinheit konfiguriert, zu vordefinierten Zeitpunkten und/oder in vordefinierten Zeitabständen und/oder bei Eintritt eines Ereignisses den Vibrationsantrieb eine vordefinierte Zeitspanne zu aktivieren, so dass der Vibrationsantrieb den Sammelbereich in der vordefinierten Zeitspanne in eine Schwingung versetzt (z.B. auf und ab und/oder hin und her). Die Schwingungsamplitude kann beispielsweise 0,1 mm bis 1 cm betragen.

In einer weiteren bevorzugten Ausführungsform ist der Sammelbereich drehbar gelagert. Die erfindungsgemäße Bildaufnahmevorrichtung umfasst in dieser Ausführungsform vorzugsweise einen Aktuator (zum Beispiel einen Motor), der den Sammelbereich um einen Winkel von zum Beispiel 90° bis 180° um eine Achse, die vorzugsweise durch eine Fläche des Sammelbereichs führt, auf der sich Gliederfüßer aufhalten können, rotiert, um sie anschließend wieder in die Ausgangslage zurückzubewegen. Auch eine Rotation um 360° oder einen anderen Winkeln ist denkbar. Vorzugsweise ist der Aktuator mit der Steuereinheit verbunden und die Steuereinheit konfiguriert, zu vordefinierten Zeitpunkten und/oder in vordefinierten Zeitabständen und/oder bei Eintritt eines Ereignisses den Aktuator zu aktivieren, so dass der Aktuator eine oder mehrere Rotationsbewegungen des Sammelbereichs ausführt.

In einer bevorzugten Ausführungsform ist die Steuereinheit der erfindungsgemäßen Bildaufnahmevorrichtung konfiguriert, von der Bildaufnahmeeinheit eine oder mehrere Bildaufnahmen vom Sammelbereich zu empfangen, die eine oder mehreren Bildaufnahmen zu analysieren, und bei der Identifizierung von Schmutz in dem Sammelbereich eines oder mehrere der zuvor genannten Reinigungsmittel zu aktivieren.

Vorzugsweise weist die erfindungsgemäße Bildaufnahmevorrichtung Mittel auf, mit denen die Bildaufnahmevorrichtung auf einem Boden oder in einem Boden stationiert werden kann. Vorzugsweise lässt sich die Bildaufnahmevorrichtung in dem Boden befestigen, um ein Umstürzen zum Beispiel bei Sturm zu verhindern. Vorzugsweise sind Mittel vorhanden, mit denen der Abstand zwischen Boden und Sammelbereich variiert werden kann. Ein Beispiel einer solchen Höhenverstellung ist ein Teleskopstab, der mit einem Ende im Boden befestigt werden kann und an dessen anderem Ende der Sammelbereich angebracht ist. Ein anderes Beispiel einer Höhenverstellung ist eine Hebebühne. Eine solche variable Höhenverstellung ermöglicht es, den Sammelbereich oberhalb von Pflanzen zu positionieren, so dass Fluginsekten den Sammelbereich bei einem Überflug über die Pflanzen erkennen und dort landen können. Die variable Höhenverstellung erlaubt ein Anpassen der Höhe des Sammelbereichs (Abstand zum Boden) an die wachsenden Pflanzen, um zu verhindern, dass die umgebenden Pflanzen den Sammelbereich verdecken. In einer bevorzugten Ausführungsform erfolgt die Höhenverstellung automatisch. Sie passt sich vorzugsweise so an, dass der Sammelbereich stets oberhalb oder auf der Höhe der umgebenden Pflanzen liegt. Dies kann durch Abstandssensoren und/oder Helligkeitssensoren bewerkstelligt werden.

In einer bevorzugten Ausführungsform umfasst die erfindungsgemäße Bildaufnahmevorrichtung einen Pflanzengrößensensor, der eine physikalische Größe misst, die mit der Größe von Pflanzen, die die erfindungsgemäße Bildaufnahmevorrichtung umgeben, korreliert. Der Sensor wandelt einen gemessenen Wert in ein Signal um. Die erfindungsgemäße Bildaufnahmevorrichtung weist ferner eine Höhenverstelleinheit zum Beispiel in Form eines Motors mit einem Exzenter auf, wobei der Exzenter eine Drehbewegung des Motors in eine Linearbewegung des Exzenters umwandelt. Vorzugsweise ist die Steuereinheit der erfindungsgemäßen Bildaufnahmevorrichtung mit dem Sensor und der Höhenverstelleinheit verbunden. Die Steuereinheit ist konfiguriert, das Signal von dem Sensor zu empfangen, mit einem Sollwert zu vergleichen und die Höhenverstelleinheit zu veranlassen, die Höhe der Bildaufnahmevorrichtung zu ändern bis das Signal dem Sollwert entspricht.

Es ist auch denkbar, dass die erfindungsgemäße Vorrichtung über Mittel verfügt, mit denen sie an einer Pflanze befestigt werden kann, wie beispielsweise ein Haken oder eine Schlinge oder ein Gurt zum Befestigen an einem Ast oder Zweig oder Stamm.

Die erfindungsgemäße Bildaufnahmevorrichtung umfasst ferner eine oder mehrere Bildaufnahmeeinheiten. Mit einer solchen Bildaufnahmeeinheit können digitale Bildaufnahmen erzeugt werden. Eine Bildaufnahmeeinheit umfasst einen Bildsensor und optische Elemente. Der Bildsensor ist eine Vorrichtung zur Aufnahme von zweidimensionalen Abbildern aus Licht auf elektrischem Weg. Üblicherweise handelt es sich um halbleiterbasierte Bildsensoren wie beispielsweise CCD- (CCD = *charge-coupled device*) oder CMOS-Sensoren (CMOS = *complementary metal-oxide-semiconductor*)*.* Die optischen Elemente (Linsen, Blenden und dergleichen) dienen einer möglichst scharfen Abbildung des Objektes, von dem eine digitale Bildaufnahme erzeugt werden soll, auf dem Bildsensor.

Die Bildaufnahmeeinheit ist so positioniert, dass der gesamte Sammelbereich oder zumindest ein Teil des Sammelbereichs auf dem Bildsensor abgebildet wird. Es ist denkbar, mehrere Bildaufnahmeeinheiten zu verwenden, die verschiedene Bereiche des Sammelbereichs auf dem jeweiligen Bildsensor abbilden. Bei einer solchen Verwendung mehrerer Bildaufnahmeeinheiten ist es vorteilhaft, wenn sich die abgebildeten Bereiche zumindest teilweise überlappen, um aus den einzelnen Bildaufnahmen zu einem späteren Zeitpunkt einfacher ein Gesamtbild erzeugen zu können.

Die erfindungsgemäße Bildaufnahmevorrichtung weist vorzugsweise eine Halterung auf, an der die Bildaufnahmeeinheit fixiert ist oder reversibel fixiert werden kann. Die Halterung befindet sich vorzugsweise in einem definierten und gleichbleibenden Abstand zum Sammelbereich und gewährleistet damit einen definierten und gleichbleibenden Abstand zwischen dem Bildsensor und dem Sammelbereich. Dies erleichtert die Fokussierung des Sammelbereichs.

Es ist denkbar, dass oberhalb des Sammelbereichs ein Gitter oder Netz (allgemein als Barriere bezeichnet) angebracht ist, das verhindert, dass Blätter oder dergleichen (Schmutz) in den Sammelbereich gelangen/gelangt. Die Seiten des Sammelbereichs bleiben vorzugsweise frei, damit Schädlinge und/oder Nützlinge von den Seiten in den Sammelbereich gelangen können. Es ist aber auch denkbar, dass die Maschenweite des Netzes oder der Gitterabstand beim Gitter so dimensioniert ist, dass nur (spezifische) Schädlinge und/oder (spezifische) Nützlinge hindurchgelangen; in einem solchen Fall kann sich das Netz oder Gitter auch über den Seitenbereich erstrecken.

Denkbar ist auch, dass bei einer erfindungsgemäßen Bildaufnahmevorrichtung, die ausschließlich zur Erzeugung von Bildaufnahmen von spezifischen Schädlingen dient, ein Sammelbereich für diese Schädlinge geschaffen wird, der für (spezifische) Nützlinge unzugänglich ist. Auch dies kann mit Hilfe einer Barriere erreicht werden. Die Barriere kann so an dem Sammelbereich oder dem Behälter angebracht sein, dass ein Innenraum entsteht, in dem sich der Sammelbereich befindet, der von der Außenwelt durch die Barriere abgetrennt ist: ein spezifischer Schädling kann nur durch die Barriere in den Innenraum gelangen; die Barriere ist so ausgeführt, dass viele Nützlinge sie nicht durchdringen können, da sie zum Beispiel zu groß sind. Denkbar ist/sind zum Beispiel eine oder mehrere Öffnungen, durch die nur Gliederfüßer in den Sammelbereich gelangen können, deren Größe eine Maximalgröße nicht übersteigt.

Die Bildaufnahmeeinheit befindet sich vorzugsweise innerhalb des Innenraumes, der durch den Behälter/den Sammelbereich und die Barriere gebildet wird.

Zur Abbildung des Sammelbereichs auf einem oder mehreren Bildsensoren ist eine Lichtquelle erforderlich, mit der der Sammelbereich beleuchtet wird, so dass Licht (elektromagnetische Strahlung im infraroten, sichtbaren und/oder ultravioletten Bereich des Spektrums) vom beleuchteten Sammelbereich in Richtung Bildaufnahmeeinheit gestreut/reflektiert wird. Hierzu kann das Tageslicht verwendet werden. Es ist aber auch denkbar, eine Beleuchtungseinheit zu verwenden, die für eine definierte, vom Tageslicht unabhängige Beleuchtung sorgt. Diese ist vorzugsweise seitlich neben der Bildaufnahmeeinheit angebracht, so dass es zu keinem Schattenwurf der Bildaufnahmeeinheit auf den Sammelbereich kommt.

Es ist auch denkbar, eine Beleuchtungsquelle unterhalb des Sammelbereichs und/oder neben dem Sammelbereich zu positionieren, die den Sammelbereich "von unten" und/oder "von der Seite" beleuchtet, während eine Bildaufnahmeeinheit eine oder mehrere digitale Bildaufnahmen "von oben" erzeugt. Eine solche Anordnung ist insbesondere dann geeignet, wenn lediglich die Zahl der im Sammelbereich befindlichen Gliederfüßer (oder eine Flächendichte) anhand einer oder mehrerer Bildaufnahmen bestimmt werden soll; durch die Beleuchtung von unten heben sich die zumeist dunklen Gliederfüßer sehr gut gegenüber der hellen Beleuchtungseinheit ab. Dies setzt allerdings voraus, dass der Boden des Behälters, der den Sammelbereich bildet, für die verwendete elektromagnetische Strahlung zumindest teilweise durchlässig ist. Falls eine Bestimmung der vorhandenen Spezies anhand einer oder mehrerer Bildaufnahmen durchgeführt werden soll, kann es notwendig sein, Licht (von oben und/oder von der Seite) auf die Gliederfüßer treffen zu lassen, das von dort zurückgestreut wird und dann auf den Bildsensor gelangt.

Es denkbar, dass mehrere Beleuchtungsquellen den Sammelbereich aus unterschiedlichen Richtungen beleuchten.

Es ist denkbar, dass das elektromagnetische Spektrum des zur Beleuchtung ausgesandten Lichts auf die Farbe spezifischer Schädlinge und/oder spezifischer Nützlinge und/oder die Farbe des Sammelbereichs angepasst ist, um einen möglichst großen Kontrast zwischen den Gliederfüßern und dem Hintergrund, vor dem sie abgebildet werden, zu erzeugen.

In einer bevorzugten Ausführungsform ist die Beleuchtung und/oder die Farbe und/oder die Oberflächenbeschaffenheit des Sammelbereichs so gewählt, dass die zur Beleuchtung verwendete elektromagnetische Strahlung stärker von den Gliederfüßern zurückgeworfen (reflektiert oder gestreut) wird als von dem Sammelbereich. In einer alternativen Ausführungsform ist die Beleuchtung und/oder die Farbe und/oder die Oberflächenbeschaffenheit des Sammelbereichs so gewählt, dass die zur Beleuchtung verwendete elektromagnetische Strahlung stärker vom Sammelbereich zurückgeworfen (reflektiert oder gestreut) wird als von den Gliederfüßern. Beide Fälle sorgen für einen hohen Kontrast. Ein hoher Kontrast erleichtert die Identifizierung von (spezifischen) Gliederfüßern.

In einer besonders bevorzugten Ausführungsform wird Licht eines Spektralbereichs verwendet, für das die (spezifischen) Gliederfüßer ein vergleichsweise geringes Absorptions- und Transmissionsvermögen aber ein hohes Reflexions- und Streuvermögen aufweisen. Vorzugsweise wird der größte Anteil an elektromagnetischer Strahlung, das auf einen Gliederfüßer trifft, von diesem zurückgeworfen (reflektiert oder gestreut) und ein kleiner Anteil absorbiert oder transmittiert. Dies erleichtert die Identifizierung der vorliegenden Spezies.

Vorzugsweise weist der Sammelbereich eine raue Oberfläche auf, um direkte Reflexionen des Tageslichts vom Sammelbereich auf den Bildsensor zu vermeiden.

Der Begriff "Licht" und "Beleuchtung" soll im Übrigen nicht bedeuten, dass der Spektralbereich auf sichtbares Licht (etwa 380 nm bis etwa 780 nm) beschränkt ist. Es ist ebenso denkbar, dass zur Beleuchtung elektromagnetische Strahlung mit einer Wellenlänge unterhalb von 380 nm (ultraviolettes Licht: 100 nm bis 380 nm) oder oberhalb von 780 nm (infrarotes Licht: 780 nm bis 1000 µm) verwendet wird. Der Bildsensor und die optischen Elemente sind an die verwendete elektromagnetische Strahlung angepasst.

Die erfindungsgemäße Bildaufnahmevorrichtung umfasst ferner eine Steuereinheit. Die Steuereinheit veranlasst die mindestens eine Bildaufnahmeeinheit zur Aufnahme von digitalen Bildaufnahmen. Bildaufnahmen können regelmäßig oder unregelmäßig erzeugt werden.

Die Steuereinheit kann konfiguriert sein, die aufgenommenen Bilder an die Sendeeinheit zu leiten, um sie über ein Funknetzwerk an ein separates Computersystem zu versenden. Auf dem Computersystem können die Bildaufnahmen dann gesichtet und/oder (automatisiert) analysiert werden.

Es ist aber auch denkbar, dass die erfindungsgemäße Bildaufnahmevorrichtung über eine Auswerteeinheit verfügt, die konfiguriert ist, die erzeugten Bildaufnahmen automatisiert zu analysieren. Die Analyse kann dazu dienen, die Zahl der in dem Sammelbereich vorhandenen Schädlinge und/oder Nützlinge zu ermitteln. Die Analyse kann auch dazu dienen, die in dem Sammelbereich vorhandenen Spezies an Schädlingen und/oder Nützlingen zu identifizieren.

Die Sendeinheit der erfindungsgemäßen Bildaufnahmevorrichtung ist konfiguriert, Informationen betreffend die eine oder die mehreren Bildaufnahmen über ein Netzwerk an ein Computersystem zu versenden. Diese Informationen können die eine oder die mehreren Bildaufnahmen selbst sein. Es ist aber auch denkbar, dass diese Informationen die Ergebnisse der Analyse durch die Auswerteeinheit sind, d.h. die Zahl der vorhandenen Schädlinge und/oder Nützlinge und/oder die jeweils identifizierten Spezies. Denkbar ist auch, dass ein Alarmsignal versandt wird, falls die automatisierte Analyse mindestens einer Bildaufnahme ergibt, dass ein spezifischer Schädling identifiziert worden ist und/oder die Zahl (spezifischer) Schädlinge und/oder (spezifischer) Nützlinge einen vordefinierten Schwellenwert über- oder unterschreitet. Auch die Anwesenheit von Schmutz, der sich zum Beispiel nicht durch ein Reinigungsmittel aus dem Sammelbereich entfernen lässt, kann einen Alarm auslösen.

Die Sendeeinheit kann so ausgestaltet sein, dass sie Informationen über ein Mobilfunknetz (z.B. GSM: *Global System for Mobile Communications*, GPRS: *General Packet Radio Service*; UMTS: *Universal Mobile Telecommunications System*, LTE: *Long Term Evolution*), über ein WLAN (*Wireless Local Artea Network*), über Bluetooth, über DECT (*Digital Enhanced Cordless Telecommunications*) über ein Niedrigenergieweitverkehrnetzwerk (*Low Power Wide Area Network* (LPWAN oder LPN)) wie beispielsweise ein NarrowBand IoT Netzwerk und/oder über eine Kombination aus verschiedenen Übertragungswegen übermittelt.

In einer bevorzugten Ausführungsform ist die Sendeeinheit so ausgestaltet, dass sie die Informationen über eine kurzreichweitige (Funk-)Verbindung an eine Basisstation übermittelt, von der die Informationen dann kabelgebunden und/oder über eine langreichweitige Funkverbindung weitergeleitet werden. Der Begriff "kurzreichweitig" bedeutet, dass die Distanz zwischen Sender und Empfänger vorzugsweise nicht größer als 5 km, besonders bevorzugt nicht größer als 1 km ist. Eine größere Distanz als die spezifizierte Maximaldistanz würde dazu führen, dass eine störungsfreie Übertragung von Daten vom Sender zum Empfänger nicht mehr gewährleistet ist. Der Begriff "langreichweitig" bedeutet, dass die Distanz zwischen Sender und Empfänger vorzugsweise größer als 1 km, besonders bevorzugt größer als 5 km ist. Die Kommunikation über die kurzreichweitige Verbindung kann z.B. mittels Funk, Ultraschall und/oder (Laser-)Licht erfolgen.

Es ist denkbar, die Zeitpunkte zur Erzeugung von Bildaufnahmen an Umweltbedingungen anzupassen. Es ist beispielsweise denkbar, die Steuereinheit so zu konfigurieren, dass nachts keine Bildaufnahmen erstellt werden. Eine solche Konfiguration kann z.B. über einen Helligkeitssensor oder über eine Zeitschaltuhr erreicht werden.

Die erfindungsgemäße Bildaufnahmevorrichtung kann ferner mindestens einen Anwesenheitssensor umfassen.

Ein bevorzugter Gegenstand der vorliegenden Erfindung ist eine Bildaufnahmevorrichtung umfassend
- einen Sammelbereich,
- eine Bildaufnahmeeinheit,
- eine Sendeeinheit,
- eine Steuereinheit und
- einen Sensor

wobei der Sensor konfiguriert ist,
   - eine physikalische Eigenschaft in seiner Umgebung zu erfassen, die mit der Wahrscheinlichkeit der Anwesenheit eines Gliederfüßers im Sammelbereich korreliert, und
   - die erfasste Eigenschaft in ein Signal umzuwandeln,
wobei die Steuereinheit konfiguriert ist,
   - die Bildaufnahmeeinheit zu veranlassen, Bildaufnahmen von dem Sammelbereich zu erzeugen, und
   - die Sendeeinheit zu veranlassen, die Bildaufnahmen und/oder Informationen zu den Bildaufnahmen über ein Netzwerk an ein Computersystem zu versenden
wobei die Steuereinheit konfiguriert ist,
   - die Zeitpunkte und/oder die zeitliche Häufigkeit, zu denen / in der die Bildaufnahmen erzeugt werden und/oder zu denen / in der die Bildaufnahmen und/oder Informationen zu den Bildaufnahmen über das Netzwerk an das Computersystem versandt werden, auf Basis des Signals des Sensors festzusetzen.

Ein weiterer bevorzugter Gegenstand der vorliegenden Erfindung ist ein Verfahren umfassend die Schritte:
- Aufstellen einer Bildaufnahmevorrichtung in einem Gebiet, wobei die Bildaufnahmevorrichtung
   ∘ einen Sammelbereich,
   ∘ eine Bildaufnahmeeinheit,
   ∘ eine Sendeeinheit,
   ∘ einen Anwesenheitssensor und
   ∘ eine Steuereinheit
   umfasst,
- Erfassen einer physikalischen Eigenschaft in einer Umgebung des Sammelbereichs mit dem Anwesenheitssensor, wobei die physikalische Eigenschaft mit der Wahrscheinlichkeit der Anwesenheit eines Gliederfüßers im Sammelbereich korreliert,
- Erzeugen von Bildaufnahmen von dem Sammelbereich und
- Versenden der Bildaufnahmen und/oder Informationen zu den Bildaufnahmen über ein Netzwerk an ein Computersystem,
wobei die Zeitpunkte und/oder die zeitliche Häufigkeit für das Erzeugen von Bildaufnahmen von dem Sammelbereich und/oder für das Versenden der Bildaufnahmen und/oder der Informationen zu den Bildaufnahmen über ein Netzwerk an ein Computersystem in Abhängigkeit der Wahrscheinlichkeit festgesetzt werden/wird, dass sich ein oder mehrere Gliederfüßer im Sammelbereich befinden.

Ein weiterer bevorzugter Gegenstand der vorliegenden Erfindung ist ein Computerprogrammprodukt umfassend ein Computerprogramm, das in einen Arbeitsspeicher eines Computers geladen werden kann und dort den Computer dazu veranlasst, folgende Schritte auszuführen:
- Empfangen eines Signals, wobei das Signal eine Information über die Wahrscheinlichkeit umfasst, dass sich ein Gliederfüßer in einem Sammelbereich befindet,
- Steuern der Erzeugung von Bildaufnahmen von dem Sammelbereich und des Versendens der Bildaufnahmen und/oder von Informationen zu den Bildaufnahmen über ein Netzwerk an ein Computersystem, wobei die Zeitpunkte und/oder die zeitliche Häufigkeit für die Erzeugung der Bildaufnahmen von dem Sammelbereich und/oder für das Versenden der Bildaufnahmen und/oder der Informationen zu den Bildaufnahmen über ein Netzwerk an das Computersystem in Abhängigkeit der Wahrscheinlichkeit festgesetzt werden/wird, dass sich Gliederfüßer im Sammelbereich befindet.

Allgemein ist ein "Sensor", auch als Detektor, (Messgrößen- oder Mess-)Aufnehmer oder (Mess-)Fühler bezeichnet, ein technisches Bauteil, das bestimmte physikalische oder chemische Eigenschaften und/oder die stoffliche Beschaffenheit seiner Umgebung qualitativ oder als Messgröße quantitativ erfassen kann. Diese Größen werden mittels physikalischer oder chemischer Effekte erfasst und in ein weiterverarbeitbares, meist elektrisches oder optisches Signal umgeformt.

Der Anwesenheitssensor erfasst eine physikalische oder chemische Eigenschaft in seiner Umgebung, die mit der Wahrscheinlichkeit der Anwesenheit eines Gliederfüßers im Sammelbereich korreliert.

"Umgebung" bedeutet in einem maximalen Abstand vom Anwesenheitssensor, der vorzugsweise nicht größer als 10 Meter, besonders bevorzugt nicht größer als 1 Meter, besonders bevorzugt nicht größer als 10 cm vom Sammelbereich entfernt ist.

"Korrelation" bedeutet, dass sich die Wahrscheinlichkeit der Anwesenheit eines Gliederfüßers im Sammelbereich ändert, wenn sich die physikalische Eigenschaft ändert. Dabei kann die Wahrscheinlichkeit der Anwesenheit eines Gliederfüßers im Sammelbereich größer werden, wenn der Wert der physikalischen Eigenschaft in einem definierten Wertebereich größer wird, und kleiner werden, wenn der Wert der physikalischen Eigenschaft in dem definierten Wertebereich kleiner wird (positive Korrelation). Die Wahrscheinlichkeit der Anwesenheit eines Gliederfüßers im Sammelbereich kann aber auch kleiner werden, wenn der Wert der physikalischen Eigenschaft in einem definierten Wertebereich größer wird, und größer werden, wenn der Wert der physikalischen Eigenschaft in dem definierten Wertebereich kleiner wird (negative Korrelation). Die Korrelation kann in einem Wertebereich linear oder nicht-linear sein. Die Korrelation ist vorzugsweise durch einen Korrelationskoeffizienten im Bereich von 0,5 bis 1 gekennzeichnet. Vorzugsweise ist die Korrelation durch einen Kausalzusammenhang gekennzeichnet.

Der Anwesenheitssensor wandelt einen Wert oder mehrere Werte, der/die die physikalische oder chemische Eigenschaft repräsentiert/repräsentieren, in ein Signal um. Das Signal wird an die Steuereinheit übermittelt. Der Begriff "Übermittlung" schließt den Vorgang ein, dass die Steuereinheit das Signal vom Sensor abruft bzw. allgemein, dass ein Empfänger Daten von einem Sender abruft. Der Begriff "Signal" bedeutet, dass eine Information von dem Sensor an die Steuereinheit übermittelt wird, die von der Steuereinheit interpretiert wird. Das Signal kann ein analoges oder ein digitales Signal sein. Es ist denkbar, dass mehrere Anwesenheitssensoren vorhanden sind, die mehrere Signale an die Steuereinheit übermitteln.

Ein Signal führt üblicherweise zu einer Aktion durch die Steuereinheit (bzw. allgemein durch den Empfänger des Signals).

In einer Ausführungsform der vorliegenden Erfindung setzt die Steuereinheit auf Basis mindestens eines Signals fest, zu welchen Zeitpunkten die Bildaufnahmeeinheit Bildaufnahmen vom Sammelbereich erzeugt.

In einer weiteren Ausführungsform der vorliegenden Erfindung setzt die Steuereinheit auf Basis mindestens eines Signals fest, mit welcher zeitlichen Häufigkeit die Bildaufnahmeeinheit Bildaufnahmen vom Sammelbereich erzeugt.

In einer weiteren Ausführungsform der vorliegenden Erfindung setzt die Steuereinheit auf Basis mindestens eines Signals fest, zu welchen Zeitpunkten und mit welcher zeitlichen Häufigkeit die Bildaufnahmeeinheit Bildaufnahmen vom Sammelbereich erzeugt.

In einer weiteren Ausführungsform der vorliegenden Erfindung setzt die Steuereinheit auf Basis mindestens eines Signals fest, zu welchen Zeitpunkten die Sendeeinheit die Bildaufnahmen und/oder Informationen zu den Bildaufnahmen über ein Netzwerk an das Computersystem übermittelt.

In einer weiteren Ausführungsform der vorliegenden Erfindung setzt die Steuereinheit auf Basis mindestens eines Signals fest, mit welcher zeitlichen Häufigkeit die Sendeeinheit die Bildaufnahmen und/oder Informationen zu den Bildaufnahmen über ein Netzwerk an das Computersystem übermittelt.

In einer weiteren Ausführungsform der vorliegenden Erfindung setzt die Steuereinheit auf Basis mindestens eines Signals fest, zu welchen Zeitpunkten und mit welcher zeitlichen Häufigkeit die Sendeeinheit die Bildaufnahmen und/oder Informationen zu den Bildaufnahmen über ein Netzwerk an das Computersystem übermittelt.

Das Signal kann eine Information zu der Wahrscheinlichkeit umfassen, dass sich in dem Sammelbereich ein (spezifischer) Schädling und/oder ein (spezifischer) Nützling befindet, und/oder das Signal kann mit der Wahrscheinlichkeit korrelieren, dass sich in dem Sammelbereich ein (spezifischer) Schädling und/oder ein (spezifischer) Nützling befindet. Zeitpunkte, zu denen die Bildaufnahmeeinheit Bildaufnahmen vom Sammelbereich erzeugt und/oder zu denen die Sendeeinheit die Bildaufnahmen und/oder Informationen zu den Bildaufnahmen über ein Netzwerk an das Computersystem übermittelt, können fest vordefinierte Zeitpunkte oder ermittelbare Zeitpunkte sein, wie beispielsweise 12 Uhr mittags an einem bestimmten Tag oder an einem bestimmten Wochentag oder an allen Tagen. Die Steuereinheit kann so konfiguriert sein, dass sie die bestimmten Zeitpunkte auf Basis mindestens eines Signals ermittelt (z.B. berechnet). Denkbar ist auch, dass die Steuereinheit so konfiguriert ist, dass sie bestimmte vordefinierte Zeitpunkte auf Basis des mindestens einen Signals aus einer Liste von vordefinierten Zeitpunkten auswählt. Auch eine Kombination von Ermitteln und Auswählen ist denkbar.

Zeitpunkte, zu denen die Bildaufnahmeeinheit Bildaufnahmen vom Sammelbereich erzeugt und/oder zu denen die Sendeeinheit die Bildaufnahmen und/oder Informationen zu den Bildaufnahmen über ein Netzwerk an das Computersystem übermittelt, können auch durch Ereignisse ausgelöst werden. Denkbar ist beispielsweise, dass das mindestens eine Signal das Eintreten eines definierten Ereignisses anzeigt und die Steuereinheit auf Basis des eingetretenen Ereignisses einen Zeitpunkt oder mehrere Zeitpunkte ermittelt und/oder auswählt. Denkbar ist, dass das Eintreten eines Ereignisses die Erzeugung einer Bildaufnahme vom Sammelbereich und/oder die Übermittlung der Bildaufnahme und/oder von Informationen zu der Bildaufnahme über ein Netzwerk an das Computersystem auslöst.

Unter dem Begriff "zeitliche Häufigkeit" wird eine Rate verstanden, mit der die Erzeugung von Bildaufnahmen und/oder die Übermittlung von Bildaufnahmen und/oder von Informationen zu den Bildaufnahmen an ein Computersystem erfolgt. Dabei kann es sich um eine regelmäßige Rate (z.B. einmal pro Tag, einmal pro Stunde, einmal pro Woche, alle 10 Minuten etc.) oder um eine unregelmäßige Rate handeln, bei der sich jedoch ein Mittelwert angeben lässt (z.B. arithmetischer Mittelwert). Die zeitliche Häufigkeit kann auch den Wert "Null" annehmen; in einem solchen Fall erfolgt, zumindest über eine definierte Zeitspanne (die durch definierte Zeitpunkte festgelegt sein kann), keine Erzeugung von Bildaufnahmen und/oder keine Übermittlung von Bildaufnahmen und/oder von Informationen zu den Bildaufnahmen an ein Computersystem.

Der Anwesenheitssensor kann z.B. eine Kombination von Zeitpunkten und zeitlichen Häufigkeiten festsetzen, wie zum Beispiel zwischen 5:00 Uhr und 21:00 Uhr alle 10 Minuten, oder immer dann, wenn ein bestimmtes erstes Ereignis eintritt jede Stunde einmal und immer dann, wenn ein bestimmtes zweites Ereignis eintritt, einmal am Tag.

Der Anwesenheitssensor kann beispielsweise ein Zeitmesser sein. Es gibt Gliederfüßer, die nur zu bestimmten Tages- oder Nachtzeiten unterwegs sind. Die Wahrscheinlichkeit, dass sich ein solcher Gliederfüßer zu der bestimmten Tages- oder Nachtzeit im Sammelbereich befindet, ist also größer als zu anderen Tages- oder Nachzeiten. Anhand des Zeitmessers kann die Steuereinheit festsetzen, dass zum Beispiel nur während einer definierten Tages- oder Nachtzeit Bildaufnahmen erzeugt und/oder Informationen übermittelt werden.

Vorzugsweise weist die erfindungsgemäße Vorrichtung mindestens einen Anwesenheitssensor auf, der kein Zeitmesser ist.

Der Anwesenheitssensor kann beispielsweise ein Helligkeitssensor sein, der die Helligkeit um den Sammelbereich oder am Sammelbereich oder um die erfindungsgemäße Bildaufnahmevorrichtung als physikalische Eigenschaft erfasst. Es gibt Gliederfüßer, die nur oder vorzugsweise bei bestimmten Helligkeitsverhältnissen unterwegs sind (z.B. Nachtfalter vorzugsweise bei Dunkelheit). Als Helligkeitssensor kann eine Fotozelle oder eine Fotodiode verwendet werden. Mit ihnen kann die Intensität von Licht in einem spezifischen Wellenlängenbereich gemessen werden.

Der Anwesenheitssensor kann beispielsweise ein Temperatursensor sein. Es gibt Gliederfüßer, die nur oder vorzugsweise in einem bestimmten Temperaturbereich unterwegs sind. Viele Bienenarten stellen ihren Flug unterhalb von 12°C ein und verbleiben vorzugsweise im Bienenstock. Die Temperatur in der erfindungsgemäßen Bildaufnahmevorrichtung oder in der Umgebung der Bildaufnahmevorrichtung korreliert damit mit der Wahrscheinlichkeit, (spezifische) Gliederfüßer im Sammelbereich anzutreffen. Temperatursensoren sind in vielfältiger Form verfügbar, z.B. in Form eines Thermoelements, Halbleiter-Temperatursensors, Temperaturfühler mit Schwingquarz, Pyrometer, Wärmebildkamera uvm.

Der Anwesenheitssensor kann beispielsweise ein Feuchtigkeitssensor sein. Es gibt Gliederfüßer, die Regen meiden. Die Wahrscheinlichkeit, dass ein Gliederfüßer bei Regen in die erfindungsgemäße Bildaufnahmevorrichtung gelangt, ist damit geringer, als bei trockenem Wetter. Der Feuchtigkeitssensor kann ein Messinstrument zur Bestimmung der Luftfeuchtigkeit sein (Hygrometer). Beispiele für gängige Hygrometer sind Absorptionshygrometer (z.B. Haarhygrometer, Spiralhygrometer, kapazitive Sensoren, Impedanzsensoren), Psychrometer und optische Hygrometer. Vorzugsweise wird ein kapazitiver Sensor oder ein Impedanzsensor (resistiver Hygrometer) verwendet. Denkbar ist auch ein Sensor zur Messung der Bodenfeuchte zusätzlich zur oder anstelle der Messung der Luftfeuchtigkeit. Denkbar ist auch ein Sensor zur Messung des Niederschlags (Niederschlagsmesser).

Der Anwesenheitssensor kann beispielsweise ein Luftdrucksensor sein. Es gibt Gliederfüßer, die auf Luftdruckänderungen reagieren (siehe z.B. F. Fournier et al.: Effect of Barometric Pressure on Flight Initiation by Trichogramma pretiosum and Trichogramma evanescens, Environmental Entomology, Vol. 34(6), 2005, Seiten 1534-1540; W.G. Wellington: The effects of variations in atmospheric pressure upon insects, Canadian Journal of Research, 1946, Vol. 24d, No. 2, Seiten 51-70). Spezifische Luftdruckänderungen können daher die Wahrscheinlichkeit erhöhen oder erniedrigen, einen (spezifischen) Gliederfüßer im Sammelbereich anzutreffen.

Der Anwesenheitssensor kann beispielsweise ein Windmesser sein. Wind kann einen Einfluss auf die Physiologie und das Verhalten von Gliederfüßern ausüben (siehe z.B. M. Chaudhry et al.: Studying the Effects of Wind on Insects, Poster, DOI: 10.13140/RG.2.1.3283.3521). Zudem kann die Verbreitung von Gliederfüßern durch Wind beeinflusst werden (siehe z.B. S. Wiktelius: Wind dispersal of insects, Grana 20: 205-207, 1981, ISSN 0017-3134). Die Wahrscheinlichkeit einen (spezifischen) Gliederfüßer im Sammelbereich vorzufinden, kann damit mit der Stärke und/oder Richtung und/oder Dauer von Winden korrelieren.

Der Anwesenheitssensor kann beispielsweise ein Sensor für chemische Stoffe in der Luft sein, wie beispielsweise ein Gaschromatograph (GC) oder ein Massenspektromer (MS) oder eine GC/MS-Kombination. Damit können z.B. Substanzen detektiert werden, die von Pflanzen als Reaktion auf einen Befall mit einem Schädling abgegeben werden (G. Witzany: Plant Communication from Biosemiotic Perspective, Plant Signal Behav. 2006 Jul-Aug; 1(4): 169―178; Signaling and Communication in Plant, Series Ed.: C. Garcia-Mata, Springer ISSN: 1867-9048).

Der Anwesenheitssensor kann beispielsweise ein Mikrofon sein. Mit dem Mikrofon werden Geräusche und/oder Laute, die von einem (spezifischen) Schädling und/oder von einem (spezifischen) Nützling erzeugt werden, erfasst. Anhand der Geräusche und/oder Laute lässt sich die Anwesenheit einer Spezies feststellen (siehe z.B.: Detecting Insect Flight Sounds in the Field: Implications for Acoustical Counting of Mosquitoes, Transactions of the ASABE, 2007, Vol. 50(4): 1481-1485).

Der Anwesenheitssensor kann beispielsweise Teil (vorzugsweise eine Fotodiode oder ein Bildsensor) einer Lichtschranke sein. Eine Lichtschranke ist ein System, das die Unterbrechung eines Lichtstrahls erkennt und als elektrisches Signal anzeigt. Auf diese Weise können bewegliche Objekte berührungslos detektiert werden. Die Lichtschranke kann so angebracht sein, dass sie einen Gliederfüßer, der in den Sammelbereich gelangt, detektiert. Die Lichtschranke kann so angebracht sein, dass sie einen Gliederfüßer, der sich über einen Eingang Zugang zum Sammelbereich oder zur erfindungsgemäßen Bildaufnahmevorrichtung verschafft, detektiert. Der Begriff "Lichtschranke" schließt auch Lichtgitter oder Lichtvorhänge ein, die mit mehreren (parallelen) Lichtstrahlen arbeiten.

Der Anwesenheitssensor kann eine Kamera sein. Die Kamera kann einen Bildsensor und optische Elemente umfassen. Der Bildsensor ist eine Vorrichtung zur Aufnahme von zweidimensionalen Abbildern aus Licht auf elektrischem Weg. Üblicherweise handelt es sich um halbleiterbasierte Bildsensoren wie beispielsweise CCD- (CCD = *charge-coupled device*) oder CMOS-Sensoren (CMOS = *complementary metal-oxide-semiconductor*)*.* Die optischen Elemente (Linsen, Blenden und dergleichen) dienen einer möglichst scharfen Abbildung eines Objekts auf dem Bildsensor. Die Kamera kann so konfiguriert sein, dass der Sammelbereich oder zumindest ein Teil davon auf dem Bildsensor abgebildet wird. Der Bildsensor kann von einer Steuereinheit der Kamera ausgelesen und analysiert werden. Bildanalyseverfahren und/oder maschinenlernende Algorithmen können eingesetzt werden, um die Anwesenheit eines (spezifischen) Gliederfüßers im Sammelbereich zu detektieren. Bei der Kamera kann es sich um die Bildaufnahmeeinheit der erfindungsgemäßen Bildaufnahmevorrichtung oder um eine separate Komponente handeln.

Der Anwesenheitssensor kann beispielsweise ein Bewegungsmelder sein. Ein Bewegungsmelder ist ein elektronischer Sensor, der Bewegungen in seiner näheren Umgebung erkennt und dadurch als elektrischer Schalter arbeiten kann. Ein Bewegungsmelder kann aktiv mit elektromagnetischen Wellen (HF, Mikrowellen oder Dopplerradar), mit Ultraschall (Ultraschall-Bewegungsmelder) oder wie ein pyroelektrischer Sensor passiv anhand von elektromagnetischer Strahlung arbeiten, die von einem Objekt oder seiner Umgebung ausgestrahlt wird. Der Bewegungsmelder kann so konfiguriert sein, dass er eine Bewegung eines (spezifischen) Gliederfüßers im Sammelbereich oder in der Umgebung des Sammelbereichs detektiert.

In einer bevorzugten Ausführungsform wird/werden die Erzeugung von Bildaufnahmen und/oder die Übermittlung von Bildaufnahmen und/oder Informationen zu den Bildaufnahmen an ein Computersystem an die Wahrscheinlichkeit angepasst, dass sich ein (spezifischer) Gliederfüßer im Sammelbereich aufhält. Die Wahrscheinlichkeit, dass eine Bildaufnahme erzeugt wird und/oder dass eine erzeugte Bildaufnahme und/oder Informationen zu einer erzeugten Bildaufnahme von der erfindungsgemäßen Bildaufnahmevorrichtung auf ein separates, externes Computersystem übermittelt werden, steigt vorzugsweise mit der Wahrscheinlichkeit, dass sich ein (spezifischer) Gliederfüßer im Sammelbereich aufhält. Dies hat den Vorteil, dass weniger unnütze Bildaufnahmen erzeugt und/oder übermittelt werden, auf denen kein (spezifischer) Gliederfüßer abgebildet ist. Dies hat den Vorteil, dass die erfindungsgemäße Bildaufnahmevorrichtung weniger Energie verbraucht. Dies hat den Vorteil, dass die erfindungsgemäße Bildaufnahmevorrichtung nicht so häufig aufgesucht werden muss, um die Energiequelle zu erneuern oder aufzuladen. Ferner werden weniger Bildaufnahmen, auf denen kein (spezifischer) Gliederfüßer abgebildet ist, unnützerweise gesichtet und/oder analysiert.

In einer bevorzugten Ausführungsform werden dann eine oder mehrere Bildaufnahmen des Sammelbereichs erzeugt, wenn mindestens ein Anwesenheitssensor die Anwesenheit eines (spezifischen) Gliederfüßers (Nützling und/oder Schädling) im Sammelbereich oder im Eingangsbereich der Bildaufnahmevorrichtung detektiert. Vorzugsweise werden mehrere Bildaufnahmen (z.B. 2, 3, 4, 5, 6, 7, 8, 9, 10 oder mehr) in einer zeitlichen Abfolge (z.B. in einem Abstand von 1 Sekunde, oder 2 Sekunden oder 3 Sekunden oder 4 Sekunden oder 5 Sekunden oder in einem anderen zeitlichen Abstand) erzeugt.

In einer weiteren bevorzugten Ausführungsform wird dann mindestens eine Bildaufnahme des Sammelbereichs erzeugt und es wird die mindestens eine Bildaufnahme und/oder es werden Informationen zu der mindestens einen Bildaufnahme an ein Computersystem übermittelt, wenn mindestens ein Anwesenheitssensor die Anwesenheit eines (spezifischen) Gliederfüßers (Nützling und/oder Schädling) im Sammelbereich oder im Eingangsbereich der Vorrichtung detektiert.

In einer weiteren bevorzugten Ausführungsform werden nur dann eine oder mehrere Bildaufnahmen des Sammelbereichs erzeugt und/oder Bildaufnahmen und/oder Informationen zu den Bildaufnahmen an ein Computersystem übermittelt, wenn die Wahrscheinlichkeit, dass sich ein (spezifischer) Gliederfüßer im Sammelbereich befindet, einen vordefinierten Schwellenwert überschreitet. Der vordefinierte Schwellenwert kann beispielsweise 30% oder 40 % oder 50 % oder 75 % oder eine andere Prozentzahl sein.

In einer bevorzugten Ausführungsform werden mehrere Anwesenheitssensoren verwendet und die Erzeugung von Bildaufnahmen und/oder die Übermittlung von Bildaufnahmen und/oder Informationen zu den Bildaufnahmen von den Signalen der mehreren Anwesenheitssensoren abhängig gemacht. Zum Beispiel ist es denkbar, einen ersten Anwesenheitssensor zu verwenden (zum Beispiel einen Zeitmesser oder einen Helligkeitssensor), mit dem ermittelt wird, ob es Tag oder Nacht ist. Bildaufnahmen werden beispielsweise nur zu bestimmten Tages- oder Nachtzeiten bzw. bei bestimmten Helligkeiten erzeugt. Ein zweiter Anwesenheitssensor kann beispielsweise die Temperatur ermitteln. Bildaufnahmen werden beispielsweise nur in einem bestimmten Temperaturbereich erzeugt. Weitere Kombinationen sind denkbar.

Die erfindungsgemäße Bildaufnahmevorrichtung weist eine Energieversorgungseinheit auf, um die elektronischen Komponenten mit elektrischer Energie zu versorgen. Vorzugsweise handelt es sich bei der Energieversorgungseinheit um eine mobile Einheit wie beispielsweise eine elektrochemische Zelle (Batterie), einen Akkumulator und/oder eine Solarzelle. Besonders bevorzugt handelt es sich um eine Kombination aus aufladbarem Akkumulator und Solarzelle, um zum einen den Wartungsaufwand gering zu halten (keine Batteriewechsel nötig) und um zum anderen auch bei wenig Sonnenstunden eine Energieversorgung gewährleisten zu können (bei einer reinen Solarzelle ist man auf ein Minimum an Sonnenenergie angewiesen).

Die Häufigkeit der Erzeugung von Bildaufnahmen kann von der verfügbaren Menge elektrischer Energie zur Versorgung der erfindungsgemäßen Vorrichtung abhängig gemacht werden. Wird zur Energieversorgung eine elektrochemische Zelle (Batterie) oder ein aufladbarer Akku verwendet, die/der beispielsweise nur einmal im Jahr erneuert/aufgeladen werden soll, können nur so viele Bildaufnahmen erstellt werden, wie elektrische Energiemenge für ein Jahr vorhanden ist.

Ein weiterer Gegenstand der vorliegenden Erfindung ist ein System umfassend
- eine Mehrzahl an Bildaufnahmevorrichtungen in einem Gebiet, wobei jede Bildaufnahmevorrichtung
   o einen Sammelbereich,
   ∘ eine Bildaufnahmeeinheit,
   ∘ eine Sendeeinheit und
   ∘ eine Steuereinheit
   umfasst,
   wobei die Steuereinheit konfiguriert ist,
   ▪ die Bildaufnahmeeinheit zu veranlassen, Bildaufnahmen von dem Sammelbereich zu erzeugen, und
   ▪ die Sendeeinheit zu veranlassen, Informationen betreffend die Bildaufnahmen über ein Netzwerk an ein Computersystem zu versenden,
- das Computersystem, das konfiguriert ist,
   - die Informationen betreffend die Bildaufnahmen von der Mehrzahl an Bildaufnahmevorrichtungen zu empfangen,
   - die empfangenen Informationen zu analysieren, wobei Informationen zu den in einem Teilgebiet vorhandenen Schädlingen und/oder Nützlingen gewonnen werden,
   - die Informationen zu den in einem Teilgebiet vorhandenen Schädlingen und/oder Nützlingen einem Nutzer oder mehreren Nutzern zu übermitteln.

Ein weiterer Gegenstand der vorliegenden Erfindung ist ein Verfahren umfassend die Schritte:
- Aufstellen einer Mehrzahl an Bildaufnahmevorrichtungen in einem Gebiet, wobei jede Bildaufnahmevorrichtung
   ∘ einen Sammelbereich,
   ∘ eine Bildaufnahmeeinheit,
   ∘ eine Sendeeinheit und
   ∘ eine Steuereinheit
   umfasst,
- Erzeugen von Bildaufnahmen des Sammelbereichs jeder Bildaufnahmevorrichtung,
- Übermitteln von Informationen betreffend die Bildaufnahmen an ein Computersystem,
- Analysieren der übermittelten Informationen und Generieren von Informationen zu den in einem Teilgebiet vorhandenen Schädlingen und/oder Nützlingen,
- Übermitteln der Informationen zu den in einem Teilgebiet vorhandenen Schädlingen und/oder Nützlingen an einen oder mehrere Nutzer.

Die Bildaufnahmevorrichtungen des erfindungsgemäßen Systems sind vorzugsweise über ein Gebiet verteilt. Ihr Abstand beträgt üblicherweise zwischen 10 Metern und 10 Kilometern. Vorzugsweise sind sie in Feldern einer spezifischen Kulturpflanze (z.B. Raps) aufgestellt, da solche Felder eine charakteristische Fauna aufweisen. Vorzugsweise wird durch Ausübung der Erfindung die in den Feldern der spezifischen Kulturpflanze lebende Fauna (Schädlinge/Nützlinge) analysiert.

Mit Hilfe einer Bildaufnahmevorrichtung kann analysiert werden, welche Schädlinge/Nützlinge und wie viele Schädlinge/Nützlinge sich in dem Bereich (z.B. Feld) aufhalten, in dem die Bildaufnahmevorrichtung aufgestellt ist.

Erfindungsgemäß werden daher mit Hilfe einer Bildaufnahmevorrichtung Schädlinge und/oder Nützlinge gezählt und die jeweils vorliegenden Spezies bestimmt.

Es ist denkbar, dass eine erfindungsgemäße Bildaufnahmevorrichtung sowohl Schädlinge als auch Nützlinge zählt und identifiziert. Es ist aber auch denkbar, dass verschiedene Bildaufnahmevorrichtungen verwendet werden, von denen ein Typ zur Identifizierung und Mengenbestimmung von (spezifischen) Schädlingen hergerichtet ist und ein anderer Typ zur Identifizierung und Mengenbestimmung von (spezifischen) Nützlingen hergerichtet ist.

Es ist denkbar, die Zeitpunkte zur Erzeugung von Bildaufnahmen und/oder die Übermittlung von Informationen betreffend die Bildaufnahmen von einer Bildaufnahmevorrichtung über ein Netzwerk an einen externen Computer an die Ergebnisse der Analyse von Bildaufnahmen, die von anderen Bildaufnahmevorrichtungen erzeugt worden sind, anzupassen. Ergibt die Analyse der Bildaufnahmen beispielsweise, dass sich Schädlinge in eine Richtung ausbreiten, ist es denkbar, die Zeitintervalle zur Erzeugung von Bildaufnahmen bei den Bildaufnahmevorrichtungen, die sich in der Richtung befinden, zu verkürzen (bzw. die zeitliche Häufigkeit der Erzeugung von Bildaufnahmen zu erhöhen).

Eine bevorzugte Ausführungsform der vorliegenden Erfindung ist damit ein System umfassend
- eine Mehrzahl an Bildaufnahmevorrichtungen in einem Gebiet, wobei jede Bildaufnahmevorrichtung
   ∘ einen Sammelbereich,
   ∘ eine Bildaufnahmeeinheit,
   ∘ eine Sendeeinheit,
   ∘ eine Empfangseinheit und
   ∘ eine Steuereinheit
   umfasst,
   wobei die Steuereinheit jeder Bildaufnahmevorrichtung konfiguriert ist,
   ▪ die Bildaufnahmeeinheit zu veranlassen, Bildaufnahmen von dem Sammelbereich zu erzeugen, und
   ▪ die Sendeeinheit zu veranlassen, Informationen betreffend die Bildaufnahmen über ein Netzwerk an ein Computersystem zu versenden,
- das Computersystem, das konfiguriert ist,
   • die Informationen betreffend die Bildaufnahmen von der Mehrzahl an Bildaufnahmevorrichtungen zu empfangen,
   • die empfangenen Informationen zu analysieren, wobei Informationen zu den in einem Teilgebiet vorhandenen Schädlingen und/oder Nützlingen gewonnen werden,
   • eine Mitteilung an eine oder mehrere Bildaufnahmevorrichtungen zu übermitteln, wenn sich eine Zahl oder Menge an Schädlingen und/oder Nützlingen in dem Teilgebiet in einer vordefinierten Weise verändert,
wobei die Empfangseinheit jeder Bildaufnahmevorrichtung konfiguriert ist, eine an die Bildaufnahmevorrichtung übermittelte Mitteilung zu empfangen,
wobei die Steuereinheit jeder Bildaufnahmevorrichtung konfiguriert ist, die Zeitpunkte und/oder die zeitliche Häufigkeit, zu denen / in der Bildaufnahmen erzeugt werden und/oder zu denen / in der Bildaufnahmen und/oder Informationen zu den Bildaufnahmen über das Netzwerk an das Computersystem versandt werden, auf Basis der Mitteilung anzupassen.

Eine weitere bevorzugte Ausführungsform ist ein Verfahren umfassend die Schritte:
- Aufstellen einer Mehrzahl an Bildaufnahmevorrichtungen in einem Gebiet, wobei jede Bildaufnahmevorrichtung
   ∘ einen Sammelbereich,
   ∘ eine Bildaufnahmeeinheit,
   ∘ eine Sendeeinheit und
   ∘ eine Steuereinheit
   umfasst,
- Erzeugen von Bildaufnahmen des Sammelbereichs jeder Bildaufnahmevorrichtung,
- Übermitteln von Informationen betreffend die Bildaufnahmen an ein Computersystem,
- Analysieren der übermittelten Informationen und Generieren von Informationen zu den in einem Teilgebiet vorhandenen Schädlingen und/oder Nützlingen,
- Identifizieren einer zeitlichen Änderung einer Menge eines oder mehrerer Schädlinge und/oder Nützlinge in dem Teilgebiet,
- Übermitteln einer Information zu der zeitlichen Änderung an einer oder mehrere Bildaufnahmevorrichtungen,
- Anpassen der Zeitpunkte und/oder der zeitlichen Häufigkeit, zu denen / in der Bildaufnahmen erzeugt werden und/oder zu denen / in der Bildaufnahmen und/oder Informationen zu den Bildaufnahmen über das Netzwerk an das Computersystem versandt werden, an die zeitliche Änderung.

Eine solche Anpassung kann zum Beispiel bedeuten, dass die zeitliche Häufigkeit vergrößert wird, wenn die Flächendichte eines (spezifischen) Nützlings und/oder (spezifischen) Schädlings steigt.

Eine solche Anpassung kann zum Beispiel bedeuten, dass die Zeitpunkte auf Basis der Anwesenheit eines (spezifischen) Nützlings und/oder (spezifischen) Schädlings festgesetzt werden, zum Beispiel in der Weise, dass Bildaufnahmen zu definierten Tageszeiten erzeugt werden, weil der (spezifische) Nützling und/oder der (spezifische) Schädling zu diesen Tageszeiten vorzugsweise unterwegs ist.

In einer bevorzugten Ausführungsform werden/wird die Zeitpunkte und/oder die zeitliche Häufigkeit, zu denen / in der Bildaufnahmen von Bildaufnahmevorrichtungen in einem definierten Teilgebiet erzeugt werden und/oder zu denen / in der Bildaufnahmen und/oder Informationen zu den Bildaufnahmen über das Netzwerk an das Computersystem versandt werden, auf Basis der Informationen zu den in einem benachbarten Teilgebiet oder in mehreren benachbarten Teilgebieten vorhandenen Schädlingen und/oder Nützlingen angepasst. Tauchen in einem Teilgebiet (spezifische) Schädlinge und/oder (spezifische) Nützlinge auf, so kann die zeitliche Häufigkeit, in der Bildaufnahmen erzeugt und/oder die Bildaufnahmen und/oder Informationen zu den Bildaufnahmen über das Netzwerk an das Computersystem versandt werden, bei Bildaufnahmevorrichtungen in angrenzenden Teilgebieten erhöht werden.

Denkbar ist auch, dass die Erzeugung von Bildaufnahmen durch eine Fernsteuerung veranlasst wird. Es ist beispielsweise denkbar, dass ein Nutzer aus der Ferne zum Beispiel über ein Funknetz die erfindungsgemäße Bildaufnahmevorrichtung zur Erzeugung einer digitalen Bildaufnahme veranlasst.

In einer besonders bevorzugten Ausführungsform bilden mehrere Bildaufnahmevorrichtungen ein vermaschtes Netz (engl. *Mesh*), d.h. Informationen werden von einer Bildaufnahmevorrichtung vorzugsweise über eine kurzreichweitige Funkverbindung zur anderen weitergeleitet. Eine Bildaufnahmevorrichtung befindet sich schließlich in der Nähe einer Basisstation oder verfügt über Mittel zur Übertragung der Informationen über eine größere Distanz als die Distanz zwischen den einzelnen Bildaufnahmevorrichtung, die das vermachte Netz bilden. Die Basisstation übermittelt die Informationen vorzugsweise über eine langreichweitige Funkverbindung (z.B. das Mobilfunknetz) und das Internet an das Computersystem. Details zum Aufbau eines vermachten Netzes können der umfangerweichen Literatur zu diesem Thema entnommen werden (siehe z.B.G. Aggelou: Wireless Mesh Networking, McGraw-Hill 2009, DOI 10.1036/0071482563; Y. Zhang et al.: Wireless Mesh Networking, Auerbach Publications 2007, ISBN: 0-8493-7399-9).

Eine bevorzugte Ausführungsform der vorliegenden Erfindung ist damit ein System umfassend
- mindestens eine Basisstation,
- ein Computersystem,
- eine erste Bildaufnahmevorrichtungen in einem Gebiet und
- eine zweite Bildaufnahmevorrichtung in dem Gebiet,
- wobei die erste Bildaufnahmevorrichtung
   ∘ einen Sammelbereich,
   ∘ eine Bildaufnahmeeinheit,
   ∘ eine Sendeeinheit, und
   ∘ eine Steuereinheit
   umfasst,
- wobei die zweite Bildaufnahmevorrichtung
   ∘ einen Sammelbereich,
   ∘ eine Bildaufnahmeeinheit,
   ∘ eine Sendeeinheit,
   ∘ eine Empfangseinheit, und
   ∘ eine Steuereinheit
   umfasst,
   wobei die Steuereinheit der ersten Bildaufnahmevorrichtung konfiguriert ist,
      - die Bildaufnahmeeinheit der ersten Bildaufnahmevorrichtung zu veranlassen, erste Bildaufnahmen von dem Sammelbereich der ersten Bildaufnahmevorrichtung zu erzeugen,
      - die Sendeeinheit der ersten Bildaufnahmevorrichtung zu veranlassen, die ersten Bildaufnahmen und/oder Informationen zu den ersten Bildaufnahmen über eine kurzreichweitige Funkverbindung an die zweite Bildaufnahmevorrichtung zu senden,
   wobei die Steuereinheit der zweiten Bildaufnahmevorrichtung konfiguriert ist,
      - die Empfangseinheit der zweiten Bildaufnahmevorrichtung zu veranlassen, die ersten Bildaufnahmen zu empfangen,
      - die Bildaufnahmeeinheit der zweiten Bildaufnahmevorrichtung zu veranlassen, zweite Bildaufnahmen von dem Sammelbereich der zweiten Bildaufnahmevorrichtung zu erzeugen,
      - die Sendeeinheit der zweiten Bildaufnahmevorrichtung zu veranlassen, die ersten Bildaufnahmen und die zweiten Bildaufnahmen und/oder Informationen zu den ersten Bildaufnahmen und zu den zweiten Bildaufnahmen über eine kurzreichweitige Funkverbindung an die Basisstation zu senden,
   wobei die Basisstation konfiguriert ist,
      - die ersten Bildaufnahmen und die zweiten Bildaufnahmen zu empfangen und über eine langreichweitige Funkverbindung an das Computersystem zu übermitteln,
   wobei das Computersystem konfiguriert ist,
      - die übermittelten Bildaufnahmen zu empfangen,
      - die übermittelten Bildaufnahmen zu analysieren, wobei Informationen zu den in dem Gebiet vorhandenen Schädlingen und/oder Nützlingen gewonnen werden,
      - die Informationen zu den in dem Gebiet vorhandenen Schädlingen und/oder Nützlingen einem Nutzer oder mehreren Nutzern zu übermitteln.

Eine weitere bevorzugte Ausführungsform der vorliegenden Erfindung ist ein Verfahren umfassend die Schritte:
- Aufstellen einer Mehrzahl an Bildaufnahmevorrichtungen in einem Gebiet, wobei jede Bildaufnahmevorrichtung
   ∘ einen Sammelbereich,
   ∘ eine Bildaufnahmeeinheit,
   ∘ eine Sendeeinheit,
   ∘ eine Empfangseinheit und
   ∘ eine Steuereinheit
   umfasst,
- Erzeugen einer ersten Bildaufnahme des Sammelbereichs einer ersten Bildaufnahmevorrichtung durch die Bildaufnahmeeinheit der ersten Bildaufnahmevorrichtung,
- Übermitteln der ersten Bildaufnahme von der ersten Bildaufnahmevorrichtung an eine zweite Bildaufnahmevorrichtung über eine kurzreichweitige Funkverbindung,
- Empfangen der ersten Bildaufnahme durch die zweite Bildaufnahmevorrichtung,
- Erzeugen einer zweiten Bildaufnahme des Sammelbereichs der zweiten Bildaufnahmevorrichtung durch die Bildaufnahmeeinheit der zweiten Bildaufnahmevorrichtung,
- Übermitteln der ersten Bildaufnahme und der zweiten Bildaufnahme von der zweiten Bildaufnahmevorrichtung an eine Basisstation über eine kurzreichweitige Funkverbindung,
- Übermitteln der ersten Bildaufnahme und der zweiten Bildaufnahme von der Basisstation an ein Computersystem über ein Netzwerk, das eine langreichweitige Funkverbindung umfasst,
- Analysieren der ersten Bildaufnahme und der zweiten Bildaufnahme durch das Computersystem und Generieren von Informationen zu den dem Gebiet vorhandenen Schädlingen und/oder Nützlingen,
- Übermitteln der Informationen zu in dem Gebiet vorhandenen Schädlingen und/oder Nützlingen an einen oder mehrere Nutzer.

In einer bevorzugten Ausführungsform ist/sind eine oder mehrere Pflanzenanalysevorrichtungen Bestandteil(e) des erfindungsgemäßen Systems. Eine Pflanzenanalysevorrichtung umfasst, wie eine Bildaufnahmevorrichtung, eine Bildaufnahmeeinheit (mit Bildsensor und optischen Elementen), eine Sendeeinheit, und eine Steuereinheit. Die Pflanzenanalysevorrichtung dient der Analyse des Zustands der angebauten Pflanzen (insbesondere der Kulturpflanzen aber auch vorhandener Opferpflanzen und/oder Schutzpflanzen) und ggf. der Identifizierung und Bewertung von Schäden, die durch Schädlinge verursacht worden sind. Eine solche Pflanzenanalysevorrichtung kann beispielsweise stationär in einem Feld für Kulturpflanzen aufgestellt sein, und dort auf Teile einer Kulturpflanze gerichtet sein (Blätter, Blüte, Stengel, Fruchtkörper und/oder dergleichen), um von diesen Teilen Bildaufnahmen zu erzeugen. Es ist auch denkbar, dass es sich um eine mobile Vorrichtung wie beispielsweise ein (unbemanntes) Fahrzeug oder ein (unbemanntes) Flugzeug (Drohne) handelt, das sich in einem Feld oder über ein Feld bewegt und Bildaufnahmen von den angebauten Pflanzen erzeugt. Bildaufnahmen können regelmäßig oder unregelmäßig erzeugt werden. Sie können zu definierten Zeitpunkten aufgenommen werden. Es ist denkbar, die Zeitpunkte zur Erzeugung von Bildaufnahmen an Umweltbedingungen anzupassen. Es ist denkbar, die Zeitpunkte zur Erzeugung von Bildaufnahmen an die Ergebnisse der Analyse von Bildaufnahmen, die von Bildaufnahmevorrichtungen und/oder anderen Pflanzenanalysevorrichtungen erzeugt worden sind, anzupassen. Es ist denkbar, dass die Erzeugung von Bildaufnahmen durch eine Fernsteuerung veranlasst wird. Die Bildaufnahmen können auf die Anwesenheit von Schäden (vorzugsweise Fraßschäden) untersucht werden. Informationen betreffend die Bildaufnahmen werden von der Pflanzenanalysevorrichtung an das Computersystem übermittelt. Bei den übermittelten Informationen kann es sich um die Bildaufnahmen selbst und/oder Ergebnisse einer oder mehrerer Analysen der Bildaufnahmen handeln. Die Bildaufnahmen können analysiert werden, um das Entwicklungsstadium der angebauten Pflanzen zu bestimmen (z.B. anhand des BBCH-Codes). Die Bildaufnahmen können analysiert werden, um den Gesundheitszustand der angebauten Pflanzen zu bestimmen (z.B. Mangelerscheinungen).

Vorzugsweise ist jeder Bildaufnahmevorrichtung und/oder jeder Pflanzenanalysevorrichtung ein Standort zugeordnet. Üblicherweise handelt es sich um den Standort, an dem die jeweilige Vorrichtung Bildaufnahmen erzeugt. Es kann sich aber auch um einen Standort in der Umgebung einer Vorrichtung handeln (z.B. der Standort einer Basisstation, mit der die jeweilige Vorrichtung über eine Funkverbindung verbunden ist), oder der Standort kann eine Unschärfe aufweisen, indem beispielsweise ein Bereich auf der Erdoberfläche angegeben ist, in dem sich die Vorrichtung befindet (z.B. in Form eines Kreises mit einem definierten Radius).

In einer bevorzugten Ausführungsform weist das erfindungsgemäße System Mittel zur Bestimmung des Standorts der Vorrichtungen auf.

Denkbar ist, dass die Vorrichtung (Bildaufnahmevorrichtung und/oder jeder Pflanzenanalysevorrichtung) über einen GPS-Sensor (GPS: Global Positioning System) oder einen anderen Sensor eines globalen Satellitennavigationssystems (GNSS) verfügt, mit dem der Standort der Vorrichtung ermittelt werden kann.

Ein Vorteil der Standortbestimmung mittels eines globalen Satellitennavigationssystems ist die hohe Genauigkeit. Nachteile sind die zusätzlichen Bauteilkosten und der vergleichsweise hohe Energiebedarf.

Denkbar ist auch, dass eine Standortbestimmung über die Funkzelle, mit der die Sendeeinheit der verbunden ist, erfolgt. Eine solche Lösung weist üblicherweise eine geringere Genauigkeit bei der Standortbestimmung auf, bedeutet aber geringere Bauteilkosten und einen geringeren Energiebedarf.

Im Mobilfunk beruht die einfachste Art der Standortbestimmung darauf, dass die Zelle, in der sich eine Sendeeinheit befindet, bekannt ist. Da beispielsweise ein eingeschaltetes Mobilfunktelefon mit einer Basisstation in Verbindung steht, lässt sich die Position des Mobilfunktelefons zumindest einer Mobilfunkzelle (Cell-ID) zuweisen. Analog kann auch mit einer erfindungsgemäßen Vorrichtung verfahren werden.

Mit Hilfe von GSM (*Global System for Mobile Communications*) kann der Standort einer Sendeeinheit auf mehrere hundert Meter genau bestimmt werden. In Städten kann der Standort auf 100 bis 500 m genau bestimmt werden; in ländlichen Gegenden (in denen die Dichte an Basisstationen geringer ist) erhöht sich der Radius auf 10 km oder mehr. Wird die Information über die Cell-ID mit dem TA-Parameter (TA: *Timing Advance*) kombiniert, dann kann die Genauigkeit erhöht werden. Je höher dieser Wert ist, desto weiter weg ist die Sendeeinheit von der Basisstation. Mit dem EOTD-Verfahren (EOTD: *Enhanced Observed Time Difference*) lässt sich eine Sendeeinheit noch genauer orten. Dabei werden die Laufzeitunterschiede der Signale zwischen der Sendeinheit und mehreren Empfangseinheiten bestimmt.

In einer Ausführungsform erfolgen die Übermittlung von Informationen und die Standortbestimmung über das Sigfox-Netz. Sigfox ist ein Low Power Wide Area Network (LPWAN) und speziell auf kleine Datenpakete und einen sehr stromsparenden Betrieb ausgelegt. Sigfox-Basisstationen können über weite Entfernungen kommunizieren, ohne von Störungen beeinträchtigt zu werden. Die Reichweite einer einzelnen Basisstation, die bis zu einer Million Sendeeinheiten verwalten kann, beträgt 3 bis 5 km in Ballungszentren und 30 bis 70 km in ländlichen Gebieten. Bei Sigfox werden die Datenpakete von allen Basisstationen im Sendebereich empfangen. Darüber lässt sich die Position einer Sendeeinheit bestimmen.

Denkbar ist auch, dass der Standort einer Vorrichtung bei ihrer Registrierung erfasst wird. In einem solchen Fall besteht ein Schritt der Registrierung in der Verknüpfung von Vorrichtung und Standort. Es ist denkbar, dass ein Nutzer mittels eines mobilen Computersystems (z.B. ein Smartphone oder ein Tablet-Computer oder dergleichen) eine eindeutige Kennung der Vorrichtung erfasst und mit Standortinformationen verknüpft. Die eindeutige Kennung dient zur Identifizierung der Vorrichtung bei ihrer Registrierung. Die eindeutige Kennung kann eine Nummer oder ein alphanumerischer Code oder ein Binärcode oder dergleichen sein, die/der an der Vorrichtung angebracht ist oder in einem Datenspeicher der Vorrichtung abgelegt ist. Die Erfassung der eindeutigen Kennung kann beispielsweise durch Eingabe über ein Eingabemittel (z.B. eine Tastatur, ein Touchscreen, ein Mikrofon (per Spracheingabe) oder dergleichen) in das mobile Computersystem erfolgen. Vorzugsweise ist die eindeutige Kennung in Form eines optisch lesbaren Codes (z.B. ein Strichcode oder ein Matrixcode oder dergleichen) oder in Form eines mittels Funk auslesbaren elektronischen Speichers (z.B. als RFID-Tag) oder dergleichen vorhanden. Dies hat den Vorteil, dass die eindeutige Kennung automatisch mit dem mobilen Computersystem ausgelesen werden kann und Eingabefehler (wie beim Eintippen über eine Tastatur durch einen Nutzer) vermieden werden. Ein optischer Code kann beispielsweise mit einer Kamera, die Bestandteil des mobilen Computersystems sein kann, erfasst werden. In einem weiteren Schritt wird der Standort bestimmt. Es ist denkbar, dass die Mittel zur Standortbestimmung durch das mobile Computersystem des Nutzers bereitgestellt werden. Das mobile Computersystem kann beispielsweise ein Smartphone sein, mit dem der Standort über die Funkzelle, mit der das Smartphone verbunden ist, oder mit einem zum Smartphone gehörigen GPS-Sensor bestimmt wird.

Sind die eindeutige Kennung erfasst und der Standort bestimmt, werden diese Informationen miteinander verknüpft. Durch die Verknüpfung ist der Vorrichtung ein Standort zugeordnet. Es ist denkbar, dass die verknüpften Informationen über ein Netzwerk an ein externes Computersystem übermittelt und dort gespeichert werden. Denkbar ist auch, dass die verknüpften Informationen auf dem mobilen Computersystem des Nutzers gespeichert werden.

Vorzugsweise erfolgt bei der Registrierung zusätzlich eine Verknüpfung der eindeutigen Kennung der Vorrichtung mit einer eindeutigen Kennung des Nutzers, so dass dem Nutzer eine individuelle Vorrichtung (oder mehrere Vorrichtungen) mit einem definierten Standort zugeordnet ist (sind). Vorzugsweise kann der Nutzer infolge dieser Verknüpfung nur Bildaufnahmen von der ihm zugeordneten Vorrichtung empfangen.

Die Informationen, die von den vorhandenen Vorrichtungen (Bildaufnahmevorrichtungen und ggf. Pflanzenanalysevorrichtungen) mittels der entsprechenden Sendeeinheiten an ein Computersystem übermittelt werden, können dort bearbeitet, analysiert, archiviert und/oder gegenüber einem Nutzer ausgegeben werden.

Ein "Computersystem" ist ein System zur elektronischen Datenverarbeitung, das mittels programmierbarer Rechenvorschriften Daten verarbeitet. Ein solches System umfasst üblicherweise einen "Computer", diejenige Einheit, die einen Prozessor zur Durchführung logischer Operationen umfasst, sowie eine Peripherie.

Als "Peripherie" bezeichnet man in der Computertechnik alle Geräte, die an den Computer angeschlossen sind, und zur Steuerung des Computers und/oder als Ein- und Ausgabegeräte dienen. Beispiele hierfür sind Monitor (Bildschirm), Drucker, Scanner, Maus, Tastatur, Laufwerke, Kamera, Mikrofon, Lautsprecher etc. Auch interne Anschlüsse und Erweiterungskarten gelten in der Computertechnik als Peripherie.

Computersysteme von heute werden häufig in Desktop-PCs, Portable PCs, Laptops, Notebooks, Netbooks und Tablet-PCs und so genannte Handhelds (z.B. Smartphone) unterteilt; alle diese Systeme können zur Ausführung der Erfindung genutzt werden.

Die Eingaben in das Computersystem erfolgen über Eingabemittel wie beispielsweise eine Tastatur, eine Maus, ein Mikrofon und/oder dergleichen. Als Eingabe soll auch die Auswahl eines Eintrags aus einem virtuellen Menü oder einer virtuellen Liste oder das Anklicken eines Auswahlkästchens und dergleichen verstanden werden.

Üblicherweise weist ein erfindungsgemäßes System eine Vielzahl (mindestens 10, vorzugsweise mehr als 20) an Bildaufnahmevorrichtungen und ggf. Pflanzenanalysevorrichtungen (zusammen als Vorrichtungen bezeichnet) auf, die einem Computersystem zugeordnet sind.

Die Vorrichtungen und das Computersystem sind über ein Netzwerk miteinander verbunden, so dass die Vorrichtungen Informationen (Daten, Bildaufnahmen, Statusinformationen, Sensordaten oder dergleichen) an das Computersystem übermitteln können. Es ist auch denkbar, dass das erfindungsgemäße System so konfiguriert ist, dass das Computersystem Informationen oder Steuerbefehle an die Vorrichtungen übermitteln kann. Das Netzwerk, über das das Computersystem und die Vorrichtungen miteinander verbunden sind, ist zumindest teilweise ein Funknetzwerk. Üblicherweise werden Informationen von einer Vorrichtung über eine Sendeeinheit per Funk an eine Basisstation gesendet, von der sie (ggf. über weitere Stationen) per Funk und/oder über Kabel an das Computersystem weitergeleitet werden.

Das erfindungsgemäße System ist so konfiguriert, dass die dazugehörigen Vorrichtungen - an einem Ort aufgestellt oder aktiviert - automatisiert Bildaufnahmen erzeugen.

In einer Ausführungsform der vorliegenden Erfindung übermitteln die Vorrichtungen die erzeugten Bildaufnahmen an das Computersystem. Die übermittelten Bildaufnahmen werden auf dem Computersystem analysiert; dabei werden die Zahl der in dem Sammelbereich vorhandenen Schädlinge und/oder Nützlinge ermittelt, die vorhandenen Spezies identifiziert und, bei Vorliegen einer oder mehrerer Pflanzenanalysevorrichtungen, werden die Bildaufnahmen in Bezug auf den Status der Pflanzen und/oder auf die Anwesenheit von Schäden untersucht und es wird ggf. die Schadenshöhe ermittelt.

In einer alternativen Ausführungsform werden die erzeugten Bildaufnahmen durch eine Auswerteeinheit der jeweiligen Vorrichtung analysiert. Zum Beispiel kann die Zahl der in dem Sammelbereich vorhandenen Schädlinge/Nützlinge ermittelt werden. Diese Zahl kann dann an das Computersystem übermittelt werden. Es können die vorhandenen Spezies identifiziert werden. Die Namen der Spezies können dann an das Computersystem übermittelt werden. Es kann der Status der angebauten Pflanzen ermittelt werden. Der Status wird dann an das Computersystem übermittelt. Es ist denkbar, dass die erzeugten Bildaufnahmen ebenfalls an das Computersystem übermittelt werden. Es ist denkbar, dass eine erzeugte Bildaufnahme zusammen mit dem Ergebnis der Analyse der jeweiligen Vorrichtung an das Computersystem übermittelt wird. Es ist denkbar, dass die erzeugten Bildaufnahmen erst nach einer Anforderung durch einen Nutzer an das Computersystem übermittelt werden.

Die Analyse der Bildaufnahmen, die von den Bildaufnahmevorrichtungen erzeugt worden sind, kann dazu dienen, zu ermitteln, ob es sich bei einem Organismus in der Bildaufnahme um einen Schadorganismus, einen Schädling, einen Nützling oder einen Organismus handelt, der für den Anbau der Kulturpflanzen ohne Belang ist. Dementsprechend kann eine Identifizierung die Zuordnung zu den drei Kategorien: "schädlich", "nützlich", und "neutral" bedeuten. Vorzugsweise dient die Identifizierung eines Schädlings der Identifizierung von Maßnahmen, die gegen den Schädling ergriffen werden können. Eine zu ergreifende Maßnahme kann beispielsweise die Applikation eines bestimmten Schädlingsbekämpfungsmittels sein.

Unter Identifizierung kann aber auch die Zuordnung einzelner Schädlinge/Nützlinge zu einem Taxon verstanden werden, d.h. die Zuordnung zu einer Klasse, Ordnung, Überfamilie, Familie, Unterfamilie, Tribus, Gattung, Art, Unterart oder zu einer Zwischenstufe im Sinne der biologischen Taxonomie.

Bei der Identifizierung von Nützlingen kann es darum gehen, diejenigen Nützlinge zu identifizieren, denen in einem Teilgebiet vorhandene Schädling als Nahrungsquelle oder Wirt dienen.

Die Identifizierung und Auszählung der Schädlinge/Nützlinge erfolgt automatisiert. Das bedeutet, dass ein Nutzer die Gliederfüßer in einer Bildaufnahme nicht selbst zählen und identifizieren muss, sondern dass das jeweilige Bild durch ein Computerprogramm in einem Arbeitsspeicher eines Computersystems Bildbearbeitungs- und Bilderkennungsalgorithmen zugeführt wird. Mit Hilfe dieser Algorithmen wird das Bild analysiert, ggf. präpariert (Filterungen und ähnliche Operationen) und es werden Merkmale extrahiert, die einen Schluss darüber erlauben, wie viele Gliederfüßer vorhanden sind und welcher Art diese sind. Derartige Algorithmen sind im Stand der Technik beschrieben.

Es ist denkbar zur Identifizierung von Schädlingen/Nützlingen ein künstliches neuronales Netz zu verwenden, das vorab an einer Vielzahl an Bildaufnahmen bekannter Schädlinge/Nützlinge trainiert worden ist.

Vorzugsweise werden weitere Informationen zur Identifizierung der Schädlinge/Nützlinge herangezogen. Beispielsweise kann die Standortinformation (z.B. Geo-Koordinaten) genutzt werden. Befindet sich die jeweilige Bildaufnahmevorrichtung beispielsweise in Deutschland, so kommen andere Schädlinge/Nützlinge in Betracht als wenn sich die Bildaufnahmevorrichtung beispielsweise in Brasilien befindet. Auch die aktuelle Jahreszeit ist eine wichtige Information, die genutzt werden kann. Je nach Jahreszeit können unterschiedliche Schädlinge/Nützlinge in Erscheinung treten. Aber auch die angebauten Pflanzen (Kulturpflanzen, Schutzpflanzen, Opferpflanzen) können Auskunft über den Schädling/Nützling Schadorganismus geben.

Auch die Analyse der Bildaufnahmen, die von der mindestens einen Pflanzenanalysevorrichtung erzeugt werden, erfolgt automatisiert. Vorzugsweise werden Algorithmen der künstlichen Intelligenz, besonders vorzugsweise selbstlernende Systeme eingesetzt. Diese Algorithmen sind in der Lage, den Entwicklungsstatus der angebauten Pflanzen anhand spezifischer Merkmale wie beispielsweise der Blattgröße, der Blattform, der Anzahl an Blätter, dem Vorhandensein von Blüten, der Form und Größe von Blüten und dergleichen zu bestimmen. Schäden an Pflanzen oder Pflanzenteilen, insbesondere Fraßschäden, sowie das Ausmaß der Schäden lassen sich als Abweichung vom Normalzustand ebenfalls automatisiert erkennen und quantifizieren.

Es ist denkbar, dass ein erfindungsgemäßes System zwei Computersysteme (ein erstes und ein zweites Computersystem) umfasst. Bei dem ersten Computersystem handelt es sich um einen Server, der über ein Netzwerk mit den Vorrichtungen (Bildaufnahmevorrichtungen und ggf. Pflanzenanalysevorrichtungen) in Verbindung steht. Auf diesem Server landen alle von den Vorrichtungen übermittelten Informationen (z.B. Bildaufnahmen, Analyseergebnisse, Statusmeldungen und dergleichen). Auf dem Server können die Informationen analysiert und archiviert werden. Zum Beispiel kann auf dem Server eine Analyse der Bildaufnahmen stattfinden. Das zweite Computersystem (Client) ist mit dem ersten Computersystem (Server) verbunden und kann Informationen (Bildaufnahmen, Analyseergebnisse und dergleichen) abfragen. Das zweite Computersystem wird üblicherweise von einem Endnutzer bedient (zum Beispiel einem Landwirt), der eine oder mehrere Vorrichtungen zum Beispiel auf einem seiner landwirtschaftlich genutzten Felder aufgestellt hat und eine Befallskontrolle durchführen möchte. Das erste Computersystem (Server) wird dann üblicherweise von dem Betreiber der Bildanalysewerkzeuge betrieben und verwaltet. Er kann die Vielzahl an Bildaufnahmen von unterschiedlichen Endnutzern verwenden, um die Algorithmen zur Zählung der Schädlinge/Nützlinge und/oder zur Identifizierung von Spezies und/oder Analyse von Schäden fortlaufend zu verbessern. Das System ist vorzugsweise so konfiguriert, dass der Nutzer des zweiten Computersystems normalerweise nur Bildaufnahmen von dem ersten Computersystem empfangen kann, die von Bildaufnahmevorrichtungen und/oder Pflanzenanalysevorrichtungen stammen, die auf diesen Nutzer registriert sind.

In einer bevorzugten Ausführungsform kann ein Nutzer, auf den ein oder mehrere Vorrichtungen (Bildaufnahmevorrichtungen und/oder Pflanzenanalysevorrichtungen) registriert sind, Nutzern auf denen andere Vorrichtungen registriert sind, einen Zugriff auf die Bildaufnahmen gestatten, die von den auf ihn registrierten Vorrichtungen zu erlauben.

Eine bevorzugte Ausführungsform der vorliegenden Erfindung ist damit ein System, umfassend
- ein erstes Computersystem zur Benutzung durch einen ersten Nutzer,
- ein zweites Computersystem zur Benutzung durch einen zweiten Nutzer,
- mindestens eine erste Bildaufnahmevorrichtung und mindestens eine zweite Bildaufnahmevorrichtung in einem Gebiet,
   wobei die erste Bildaufnahmevorrichtung auf den ersten Nutzer registriert ist,
   wobei die zweite Bildaufnahmevorrichtung den zweiten Nutzer registriert ist,
   wobei die erste Bildaufnahmevorrichtung und die zweite Bildaufnahmevorrichtung jeweils
      ∘ einen Sammelbereich,
      ∘ eine Bildaufnahmeeinheit,
      ∘ eine Sendeeinheit, und
      ∘ eine Steuereinheit
      umfassen,
   wobei die Steuereinheit der ersten Bildaufnahmevorrichtung konfiguriert ist,
      ▪ die Bildaufnahmeeinheit der ersten Bildaufnahmevorrichtung zu veranlassen, Bildaufnahmen von dem Sammelbereich der ersten Bildaufnahmevorrichtung zu erzeugen, und
      ▪ die Sendeeinheit zu veranlassen, die Bildaufnahmen und/oder Informationen zu den Bildaufnahmen über ein Netzwerk an ein drittes Computersystem zu versenden,
- das dritte Computersystem, das über ein Netzwerk mit dem ersten Computersystem und mit dem zweiten Computersystem verbunden ist, und das konfiguriert ist,
   - die Bildaufnahmen und/oder Informationen zu den Bildaufnahmen zu empfangen,
   - die empfangenen Bildaufnahmen und/oder Informationen zu analysieren, wobei Informationen zu den in einem Teilgebiet vorhandenen Schädlingen und/oder Nützlingen gewonnen werden,
   - die Informationen zu den in dem Teilgebiet vorhandenen Schädlingen und/oder Nützlingen dem ersten Nutzer zu übermitteln,

   wobei das erste Computersystem konfiguriert ist,
      - einen Freigabebefehl vom ersten Nutzer zu empfangen,
      - in Reaktion auf den Freigabebefehl eine Freigabe-Mitteilung an das dritte Computersystem zu übermitteln,
   wobei das dritte Computersystem konfiguriert ist,
      - die Freigabe-Mitteilung zu empfangen,
      - in Reaktion auf die Freigabe-Mitteilung dem zweiten Nutzer einen Zugang zu den Bildaufnahmen und/oder Informationen zu den Bildaufnahmen zu gewähren, so dass der zweite Nutzer die Bildaufnahmen und/oder Informationen zu den Bildaufnahmen mit Hilfe des zweiten Computersystems vom dritten Computersystem abrufen kann.

Eine bevorzugte Ausführungsform der vorliegenden Erfindung ist ein Verfahren umfassend die Schritte:
- Aufstellen einer ersten Bildaufnahmevorrichtung und einer zweiten Bildaufnahmevorrichtung in einem Gebiet,
   wobei die erste Bildaufnahmevorrichtung auf einen ersten Nutzer registriert ist,
   wobei die zweite Bildaufnahmevorrichtung auf einen zweiten Nutzer registriert ist,
   wobei die erste Bildaufnahmevorrichtung
      ∘ einen Sammelbereich,
      ∘ eine Bildaufnahmeeinheit,
      ∘ eine Sendeeinheit, und eine
      ∘ eine Steuereinheit
      umfasst,
- Erzeugen von Bildaufnahmen von dem Sammelbereich der ersten Bildaufnahmevorrichtung durch die Bildaufnahmeeinheit der ersten Bildaufnahmevorrichtung,
- Übermitteln der Bildaufnahmen an ein Computersystem über ein Netzwerk,
- Analysieren der Bildaufnahmen durch das Computersystem und Generieren von Informationen zu den in einem Teilgebiet vorhandenen Schädlingen und/oder Nützlingen,
- Übermitteln der Informationen zu den in dem Teilgebiet vorhandenen Schädlingen und/oder Nützlingen an den ersten Nutzer,
- Empfangen einer Freigabe-Mitteilung von dem ersten Nutzer durch das Computersystem,
- Übermitteln der Informationen zu den in dem Teilgebiet vorhandenen Schädlingen und/oder Nützlingen an den zweiten Nutzer.

In einer bevorzugten Ausführungsform werden die Informationen, die von verschiedenen Vorrichtungen an ein Computersystem übermittelt werden, analysiert, wobei eine Ausbreitungsrichtung von (spezifischen) Schädlingen/Nützlingen ermittelt wird. Es ist beispielsweise denkbar, dass eine Schädlingsspezies/Nützlingsspezies zunächst von einer ersten Bildaufnahmevorrichtung detektiert wird und zu einem späteren Zeitpunkt, dieselbe Schädlingsspezies/Nützlingsspezies von einer zweiten Bildaufnahmevorrichtung detektiert wird. Daraus kann geschlossen werden, dass sich die entsprechende Schädlingsspezies/Nützlingsspezies von der ersten Bildaufnahmevorrichtung in die Richtung der zweiten Bildaufnahmevorrichtung ausbreitet. Bei einer Vielzahl an Bildaufnahmevorrichtungen können präzisere Aussagen zur Ausbreitungsrichtung der Schädlingsspezies/Nützlingsspezies getroffen werden.

Eine bevorzugte Ausführungsform der vorliegenden Erfindung ist damit ein System, umfassend
- eine Mehrzahl an Bildaufnahmevorrichtungen in einem Gebiet, wobei jede Bildaufnahmevorrichtung
   ∘ einen Sammelbereich,
   ∘ eine Bildaufnahmeeinheit,
   ∘ eine Sendeeinheit, und
   ∘ eine Steuereinheit
   umfasst,
   wobei die Steuereinheit konfiguriert ist,
   ▪ die Bildaufnahmeeinheit zu veranlassen, Bildaufnahmen von dem Sammelbereich zu erzeugen, und
   ▪ die Sendeeinheit zu veranlassen, Informationen betreffend die Bildaufnahmen über ein Netzwerk an ein Computersystem zu versenden,
- das Computersystem, das konfiguriert ist,
   - die Informationen betreffend die Bildaufnahmen von der Mehrzahl an Bildaufnahmevorrichtungen zu empfangen,
   - die empfangenen Informationen zu analysieren, wobei Informationen zu den Mengen eines in den Sammelbereichen der Mehrzahl an Bildaufnahmevorrichtungen vorhandenen (spezifischen) Schädlings und/oder (spezifischen) Nützlings gewonnen werden,
   - die Mengen des in den Sammelbereichen verschiedener Bildaufnahmevorrichtungen vorhandenen (spezifischen) Schädlings und/oder (spezifischen) Nützlings zu vergleichen und Unterschiede in den Mengen festzustellen,
   - aus den Unterschieden in den Mengen eine Ausbreitungsrichtung des spezifischen Schädlings und/oder spezifischen Nützlings zu berechnen, und
   - die Ausbreitungsrichtung einem Nutzer oder mehreren Nutzern zu übermitteln.

Eine bevorzugte Ausführungsform der vorliegenden Erfindung ein Verfahren umfassend die Schritte:
- Aufstellen einer Mehrzahl an Bildaufnahmevorrichtungen in einem Gebiet, wobei jede Bildaufnahmevorrichtung
   ∘ einen Sammelbereich,
   ∘ eine Bildaufnahmeeinheit,
   ∘ eine Sendeeinheit, und
   ∘ eine Steuereinheit
   umfasst,
- Erzeugen von Bildaufnahmen des Sammelbereichs jeder Bildaufnahmevorrichtung,
- Übermitteln von Informationen betreffend die Bildaufnahmen an ein Computersystem,
- Analysieren der übermittelten Informationen und Generieren von Informationen zu den in einem Teilgebiet vorhandenen Schädlingen und/oder Nützlingen,
- Ermitteln von Unterschieden bei den Mengen der in den Sammelbereichen verschiedener Bildaufnahmevorrichtungen vorhandenen Schädlinge und/oder Nützlinge,
- Berechnen einer Ausbreitungsrichtung der Schädlinge und/oder Nützlinge in dem Gebiet oder Teilgebiet.
- Übermitteln von Informationen zu der Ausbreitungsrichtung der Schädlinge und/oder Nützlinge an einen oder mehrere Nutzer.

In einer bevorzugten Ausführungsform wird zudem die Ausbreitungsgeschwindigkeit von Schädlingen/Nützlingen oder eines spezifischen Schädlings/Nützlings aus den Bildaufnahmen einer Mehrzahl an Bildaufnahmevorrichtungen ermittelt.

In einer bevorzugten Ausführungsform wird anhand der ermittelten Ausbreitungsrichtung und der ermittelten Ausbreitungsgeschwindigkeit eine Vorhersage getroffen, die angibt, wann die Schädlinge/Nützlinge (oder Schädlingsspezies/Nützlingsspezies) weitere Bereiche (Felder, Gebiete) erreichen werden.

In einer bevorzugten Ausführungsform fließen Wetterdaten (aktuelles Wetter, Wetter der vergangenen Tage, vorhergesagtes Wetter der nächsten Tage) in die Vorhersage der Ausbreitungsrichtung und der Ausbreitungsgeschwindigkeit ein.

Vorhersagen werden üblicherweise für einen Zeitraum von 1 bis 20 Tagen in die Zukunft erzeugt, besonders bevorzugt für einen Zeitraum von 1 bis 10 Tagen in die Zukunft.

In einer bevorzugten Ausführungsform werden in einem Feld mit Hilfe einer oder mehrerer Bildaufnahmevorrichtungen die im Sammelbereich / in den Sammelbereichen befindlichen Gliederfüßer identifiziert. In einem nächsten Schritt wird analysiert, ob unter den identifizierten Gliederfüßern Schädlinge und ihnen gegenüberstehende Nützlinge sind, denen die identifizierten Schädlinge als Nahrung oder Wirt dienen. Falls solche Nützlinge und/oder Schädlinge vorhanden sind, wird ihre Zahl bestimmt. Diese Zahlen werden verglichen, um zu erkennen, ob die Nützlinge allein in der Lage sind, eine unkontrollierte Vermehrung und/oder Ausbreitung der Schädlinge zu verhindern. Vorzugsweise werden die Zahlen zueinander ins Verhältnis gesetzt. Das Verhältnis der Zahl an Schädlingen zu der Zahl an ihnen gegenüberstehenden Nützlingen wird mit einem empirisch ermittelten Schwellenwert verglichen. Ist das Verhältnis kleiner als der Schwellenwert, ist nicht mit einer unkontrollierte Vermehrung und/oder Ausbreitung der Schädlinge zu rechnen. Ist das Verhältnis größer als der Schwellenwert, sollten Maßnahmen ergriffen werden, um einen Ernteverlust zu vermeiden. Das Ergebnis des Vergleichs kann einem Nutzer, vorzugsweise dem Landwirt, der das betrachtete Feld bewirtschaftet, angezeigt werden. Vorzugsweise wird dem Nutzer zusätzlich eine Maßnahme zur Bekämpfung der Schädlinge empfohlen. Zu der Empfehlung kann die Nennung eines Pflanzenschutzmittels (zum Beispiel eines Insektizids), die auszubringende Menge an Pflanzenschutzmittel, ein günstiger Zeitraum zum Ausbringen des Pflanzenschutzmittels und dergleichen angezeigt werden.

Eine bevorzugte Ausführungsform der vorliegenden Erfindung ist damit ein System, umfassend
- mindestens eine Bildaufnahmevorrichtung in einem Gebiet, wobei die mindestens eine Bildaufnahmevorrichtung
   ∘ einen Sammelbereich,
   ∘ eine Bildaufnahmeeinheit,
   ∘ eine Sendeeinheit, und
   ∘ eine Steuereinheit
   umfasst,
   wobei die Steuereinheit konfiguriert ist,
   ▪ die Bildaufnahmeeinheit zu veranlassen, Bildaufnahmen von dem Sammelbereich zu erzeugen, und
   ▪ die Sendeeinheit zu veranlassen, Informationen betreffend die Bildaufnahmen über ein Netzwerk an ein Computersystem zu versenden,
- das Computersystem, das konfiguriert ist,
   - die Informationen betreffend die Bildaufnahmen von der mindestens einen Bildaufnahmevorrichtung zu empfangen,
   - die empfangenen Informationen zu analysieren, wobei Informationen über die in einem Teilgebiet vorhandenen Mengen an (spezifischen) Schädlingen und (spezifischen) Nützlingen gewonnen werden,
   - das Verhältnis der Menge der in dem Teilgebiet vorhandenen (spezifischen) Schädlinge zu der Menge der in dem Teilgebiet vorhandenen (spezifischen) Nützlinge zu berechnen,
   - das Verhältnis mit einem Schwellenwert zu vergleichen und für den Fall, dass das Verhältnis den Schwellenwert überschreitet, eine Mitteilung an einen oder mehrere Nutzer zu übermitteln, dass das Verhältnis überschritten ist.

Eine weitere bevorzugte Ausführungsform der vorliegenden Erfindung ist ein Verfahren, umfassend die Schritte:
- Aufstellen einer Mehrzahl an Bildaufnahmevorrichtungen in einem Gebiet, wobei jede Bildaufnahmevorrichtung
   ∘ einen Sammelbereich,
   ∘ eine Bildaufnahmeeinheit,
   ∘ eine Sendeeinheit, und
   ∘ eine Steuereinheit
   umfasst,
- Erzeugen von Bildaufnahmen des Sammelbereichs jeder Bildaufnahmevorrichtung,
- Übermitteln von Informationen betreffend die Bildaufnahmen an ein Computersystem,
   - Analysieren der übermittelten Informationen und Generieren von Informationen über die in einem Teilgebiet vorhandenen Mengen an (spezifischen) Schädlingen und (spezifischen) Nützlingen,
   - Berechnen des Verhältnisses der Menge der in dem Teilgebiet vorhandenen (spezifischen) Schädlinge zu der Menge der in dem Teilgebiet vorhandenen (spezifischen) Nützlinge,
   - Vergleichen des Verhältnisses mit einem Schwellenwert
   - für den Fall, dass das Verhältnis den Schwellenwert überschreitet: Übermitteln einer Mitteilung an einen oder mehrere Nutzer, dass das Verhältnis überschritten ist.

In einer weiteren bevorzugten Ausführungsform werden in einem Feld mit Hilfe einer oder mehrerer Bildaufnahmevorrichtungen die im Sammelbereich / in den Sammelbereichen befindlichen Gliederfüßer identifiziert. In einem nächsten Schritt wird analysiert, ob unter den identifizierten Gliederfüßern Schädlinge und Nützlinge sind. Falls solche Nützlinge und Schädlinge vorhanden sind, kann ihre jeweilige Zahl bestimmt werden. Falls ein (spezifischer) Schädling vorhanden ist, kann z.B. durch Abfrage aus einer Datenbank, in der für eine Vielzahl an (spezifischen) Schädlingen Bekämpfungsmittel zur Bekämpfung der (spezifischen) Schädlinge gespeichert sind, ein oder mehrere Bekämpfungsmittel zur Bekämpfung des vorhandenen (spezifischen) Schädlings ermittelt werden. Falls ein (spezifischer) Nützling vorhanden ist, kann z.B. durch Abfrage aus einer Datenbank, in der für eine Vielzahl an (spezifischen) Nützlingen die Auswirkung einer Vielzahl an Bekämpfungsmitteln auf die (spezifischen) Nützlinge gespeichert sind, die Auswirkungen der ermittelten Bekämpfungsmittel zur Bekämpfung der vorhandenen (spezifischen) Schädlinge auf die vorhandenen (spezifischen) Nützlinge ermittelt werden. Die ermittelten Bekämpfungsmittel und die ermittelten Auswirkungen auf die vorhandenen Nützlinge können einem Nutzer angezeigt werden. Der Nutzer kann dann z.B. ein Bekämpfungsmittel auswählen, das möglichst geringe Auswirkungen auf die vorhandenen (spezifischen) Nützlinge hat.

Es kann auch z.B. anhand eines Modells berechnet werden, welche Auswirkungen eine Bekämpfung der Schädlinge z.B. mit einem Insektizid auf die Nützlinge haben könnte. Es kann berechnet werden, ob die negativen Auswirkungen auf die Nützlinge gegenüber den positiven Auswirkungen der Bekämpfung der Schädlinge überwiegen. Überwiegen die negativen Auswirkungen auf die Nützlinge, kann von einer Bekämpfung der Schädlinge abgeraten und/oder Abstand genommen werden.

Eine bevorzugte Ausführungsform der vorliegenden Erfindung ist damit ein System, umfassend
- mindestens eine Bildaufnahmevorrichtung in einem Gebiet, wobei die mindestens eine Bildaufnahmevorrichtung
   ∘ einen Sammelbereich,
   ∘ eine Bildaufnahmeeinheit,
   ∘ eine Sendeeinheit, und
   ∘ eine Steuereinheit
   umfasst,
   wobei die Steuereinheit konfiguriert ist,
   ▪ die Bildaufnahmeeinheit zu veranlassen, Bildaufnahmen von dem Sammelbereich zu erzeugen, und
   ▪ die Sendeeinheit zu veranlassen, Informationen betreffend die Bildaufnahmen über ein Netzwerk an ein Computersystem zu versenden,
- das Computersystem, das konfiguriert ist,
   - die Informationen betreffend die Bildaufnahmen von der mindestens einen Bildaufnahmevorrichtung zu empfangen,
   - die empfangenen Informationen zu analysieren, wobei Informationen über die in einem Teilgebiet vorhandenen (spezifischen) Schädlinge und (spezifischen) Nützlinge gewonnen werden,
   - anhand der Informationen über die in dem Teilgebiet vorhandenen (spezifischen) Schädlinge ein oder mehrere Bekämpfungsmittel zur Bekämpfung der (spezifischen) Schädlinge zu identifizieren,
   - die Auswirkungen des einen oder der mehreren ermittelten Bekämpfungsmittel auf die in dem Teilgebiet vorhandenen (spezifischen) Nützlinge zu ermitteln,
   - Informationen zu dem einen oder den mehreren identifizierten Bekämpfungsmitteln und zu den Auswirkungen des einen oder der mehreren identifizierten Bekämpfungsmittel auf die in dem Teilgebiet vorhandenen (spezifischen) Nützlinge einem oder mehreren Nutzern zu übermitteln.

Eine bevorzugte Ausführungsform der vorliegenden Erfindung ist auch ein Verfahren, umfassend die Schritte:
- Aufstellen einer Mehrzahl an Bildaufnahmevorrichtungen in einem Gebiet, wobei jede Bildaufnahmevorrichtung
   ∘ einen Sammelbereich,
   ∘ eine Bildaufnahmeeinheit,
   ∘ eine Sendeeinheit, und
   ∘ eine Steuereinheit
   umfasst,
- Erzeugen von Bildaufnahmen des Sammelbereichs jeder Bildaufnahmevorrichtung,
- Übermitteln von Informationen betreffend die Bildaufnahmen an ein Computersystem,
   - Analysieren der übermittelten Informationen und Generieren von Informationen über die in einem Teilgebiet vorhandenen Mengen an (spezifischen) Schädlingen und (spezifischen) Nützlingen,
   - Identifizieren eines oder mehrerer Bekämpfungsmittel zur Bekämpfung der (spezifischen) Schädlinge anhand der Informationen über die in dem Teilgebiet vorhandenen (spezifischen) Schädlinge,
   - Ermitteln der Auswirkungen des einen oder der mehreren ermittelten Bekämpfungsmittel auf die in dem Teilgebiet vorhandenen (spezifischen) Nützlinge,
   - Übermitteln von Informationen zu dem einen oder den mehreren identifizierten Bekämpfungsmitteln und zu den Auswirkungen des einen oder der mehreren identifizierten Bekämpfungsmittel auf die in dem Teilgebiet vorhandenen (spezifischen) Nützlinge an einen oder mehrere Nutzer.

In einer bevorzugten Ausführungsform wird die Befallsdichte mit einem spezifischen Schädling für ein Teilgebiet ermittelt. Es wird ermittelt, ob eine Schadschwelle überschritten ist. Bei der Ermittlung, ob die Schadschwelle überschritten ist, werden vorzugsweise Informationen zum Pflanzenstatus (Gesundheit der Pflanzen, Entwicklungsstadium, zu erwartender Ernteertrag) berücksichtigt. Bei der Ermittlung, ob die Schadschwelle überschritten ist, werden vorzugsweise Informationen zu vorhandenen Nützlingen (Zahl und Art der vorhandenen Nützlinge) berücksichtigt. Das Ergebnis wird einem Landwirt, der das Teilgebiet bewirtschaftet, gegenüber angezeigt. Ist die Schadschwelle überschritten, werden Maßnahmen empfohlen, die der Landwirt ergreifen kann, um den zu erwartenden Schaden zu reduzieren.

Eine bevorzugte Ausführungsform der vorliegenden Erfindung ist damit ein System, umfassend
- mindestens eine Bildaufnahmevorrichtung in einem Gebiet, wobei die mindestens eine Bildaufnahmevorrichtung
   ∘ einen Sammelbereich,
   ∘ eine Bildaufnahmeeinheit,
   ∘ eine Sendeeinheit, und
   ∘ eine Steuereinheit
   umfasst,
   wobei die Steuereinheit der Bildaufnahmevorrichtung konfiguriert ist,
   ▪ die Bildaufnahmeeinheit zu veranlassen, Bildaufnahmen von dem Sammelbereich zu erzeugen, und
   ▪ die Sendeeinheit zu veranlassen, Informationen betreffend die Bildaufnahmen über ein Netzwerk an ein Computersystem zu versenden,
- mindestens eine Pflanzenanalysevorrichtung in dem Gebiet, wobei die mindestens eine Pflanzenanalysevorrichtung
   ∘ eine Bildaufnahmeeinheit,
   ∘ eine Sendeeinheit, und
   ∘ eine Steuereinheit
umfasst,
wobei die Steuereinheit der Pflanzenanalysevorrichtung konfiguriert ist,
▪ die mindestens eine Bildaufnahmeeinheit zu veranlassen, Bildaufnahmen von einer oder mehreren Pflanzen zu erzeugen, und
▪ die Sendeeinheit zu veranlassen, Informationen betreffend die Bildaufnahmen über ein Netzwerk an ein Computersystem zu versenden,

- das Computersystem, das konfiguriert ist,
   - die Informationen betreffend die Bildaufnahmen von der mindestens einen Bildaufnahmevorrichtung zu empfangen,
   - die von der mindestens einen Bildaufnahmevorrichtung empfangenen Informationen zu analysieren, wobei für ein Teilgebiet eine Befallsdichte in Bezug auf einen oder mehrere (spezifische) Schädlinge gewonnen werden,
   - die Informationen betreffend die Bildaufnahmen von der mindestens einen Pflanzenanalysevorrichtung zu empfangen,
   - die von der mindestens einen Pflanzenanalysevorrichtung empfangenen Informationen zu analysieren, wobei Informationen über die in dem Teilgebiet an den Pflanzen verursachten Schäden ermittelt werden,
   - anhand der Befallsdichte und der in dem Teilgebiet an den Pflanzen verursachten Schäden zu ermitteln, ob eine Schadschwelle überschritten ist,
   - für den Fall, dass eine Schadschwelle überschritten ist, Informationen über die überschrittene Schadschwelle einem oder mehreren Nutzern zu übermitteln.

Eine bevorzugte Ausführungsform der vorliegenden Erfindung ist auch ein Verfahren, umfassend die Schritte:
- Aufstellen mindestens einer Bildaufnahmevorrichtung und mindestens einer Pflanzenanalysevorrichtung in einem Gebiet, wobei die Bildaufnahmevorrichtung einen Sammelbereich umfasst,
- Erzeugen von ersten Bildaufnahmen des Sammelbereichs durch die Bildaufnahmevorrichtung,
- Erzeugen von zweiten Bildaufnahmen von Pflanzen in dem Gebiet durch die Pflanzenanalysevorrichtung,
- Übermitteln der ersten Bildaufnahmen und/oder Informationen zu den ersten Bildaufnahmen über ein Netzwerk an ein Computersystem,
- Übermitteln der zweiten Bildaufnahmen und/oder Informationen zu den zweiten Bildaufnahmen über ein Netzwerk an das Computersystem,
- Analysieren der ersten Bildaufnahmen und/oder der Informationen zu den ersten Bildaufnahmen und Ermitteln einer Befallsdichte an (spezifischen) Schädlingen in einem Teilgebiet,
- Analysieren der zweiten Bildaufnahmen und/oder der Informationen zu den zweiten Bildaufnahmen und Generieren von Informationen über die in dem Teilgebiet an den Pflanzen verursachten Schäden,
- Ermitteln anhand der Befallsdichte und der in dem Teilgebiet an den Pflanzen verursachten Schäden, ob eine Schadschwelle überschritten ist,
- für den Fall, dass eine Schadschwelle überschritten ist: Übermitteln von Informationen über die überschrittene Schadschwelle an einen oder mehrere Nutzern.

In vielen Teilgebieten werden Grünstreifen angrenzend an ein Feld für Kulturpflanzen angebaut, um die Biodiversizität zu erhöhen. Es ist denkbar, dass ein Landwirt die Effektivität der Grünstreifen überprüfen will und/oder gegenüber einer Behörde nachweisen muss. In einer bevorzugten Ausführungsform wird daher mittels der in einem Teilgebiet vorhandenen Bildaufnahmevorrichtungen, die Zahl und Art der in dem Teilgebiet vorkommenden Nützlinge oder die Zahl einer oder mehrerer definierter Nützlingsspezies ermittelt. Aus den ermittelten Daten werden für eine oder mehrere Nützlingsspezies Flächendichten ermittelt (z.B. Anzahl der Nützlingsspezies pro Hektar). Die Flächendichten werden dem Landwirt, der das Teilgebiet bewirtschaftet, und/oder einer Behörde übermittelt und angezeigt.

Eine bevorzugte Ausführungsform der vorliegenden Erfindung ist damit ein System, umfassend
- mindestens eine Bildaufnahmevorrichtung in einem Gebiet, wobei die mindestens eine Bildaufnahmevorrichtung
   o einen Sammelbereich,
   o eine Bildaufnahmeeinheit,
   o eine Sendeeinheit, und
   o eine Steuereinheit
   umfasst,
   wobei die Steuereinheit der Bildaufnahmevorrichtung konfiguriert ist,
   ▪ die Bildaufnahmeeinheit zu veranlassen, Bildaufnahmen von dem Sammelbereich zu erzeugen, und
   ▪ die Sendeeinheit zu veranlassen, Informationen betreffend die Bildaufnahmen über ein Netzwerk an ein Computersystem zu versenden,
- das Computersystem, das konfiguriert ist,
   - die Informationen betreffend die Bildaufnahmen von der mindestens einen Bildaufnahmevorrichtung zu empfangen,
   - die von der mindestens einen Bildaufnahmevorrichtung empfangenen Informationen zu analysieren, wobei Informationen über die in einem Teilgebiet vorhandenen (spezifischen) Nützlinge gewonnen werden,
   - die Informationen über die in dem Teilgebiet vorhandenen (spezifischen) Nützlinge einem oder mehreren Nutzern zu übermitteln.

Eine bevorzugte Ausführungsform der vorliegenden Erfindung ist auch ein Verfahren, umfassend die Schritte:
- Aufstellen einer Mehrzahl an Bildaufnahmevorrichtungen in einem Gebiet, wobei jede Bildaufnahmevorrichtung
   o einen Sammelbereich,
   o eine Bildaufnahmeeinheit,
   o eine Sendeeinheit, und
   o eine Steuereinheit
   umfasst,
- Erzeugen von Bildaufnahmen des Sammelbereichs jeder Bildaufnahmevorrichtung,
- Übermitteln von Informationen betreffend die Bildaufnahmen an ein Computersystem,
   - Analysieren der übermittelten Informationen und Generieren von Informationen über die in einem Teilgebiet vorhandenen Mengen an (spezifischen) Nützlingen,
   - Übermitteln der Informationen über die in einem Teilgebiet vorhandenen Mengen an (spezifischen) Nützlingen an einen oder mehrere Nutzer.

Werden mit Hilfe des erfindungsgemäßen Systems umfassend mehrere erfindungsgemäße Bildaufnahmevorrichtungen (spezifische) Schädlinge detektiert und ist die Befallsdichte mit einem oder mehreren (spezifischen) Schädlingen an den Standorten mehrerer aufgestellter Bildaufnahmevorrichtungen überschritten, ist es sinnvoll, dass die Bekämpfung der (spezifischen) Schädlingen konzertiert erfolgt. "Konzertiert" bedeutet, dass die Bekämpfung in abgestimmter Weise erfolgt. Vorzugsweise erfolgt eine Applikation eines oder mehrerer Bekämpfungsmittel in einer gleichen (vorgegebenen) Zeitspanne. Eine konzertierte Bekämpfung ist wesentlich effektiver und verringert das Risiko der Ausbildung von Resistenzen gegen die eingesetzten Bekämpfungsmittel. Eine konzertierte Bekämpfung kann beispielsweise so erfolgen: Es werden die Befallsdichten in Bezug auf einen (spezifischen) Schädling an verschiedenen Standorten, an denen Bildaufnahmevorrichtungen positioniert sind, bestimmt. Sind die Schadschwellen in Bezug auf den einen (spezifischen) Schädling an mehreren Standorten überschritten, werden die Nutzer der entsprechenden Bildaufnahmevorrichtungen an den mehreren Standorten identifiziert. Dies kann durch eine Abfrage aus einer Datenbank erfolgen. Die Nutzer werden anschließend kontaktiert und es wird ihnen mitgeteilt zu welchem Zeitpunkt sie ein (spezifisches) Bekämpfungsmittel gegen die (spezifischen) Schädlinge in welcher Menge ausbringen sollen. Alternativ kann die Ausbringung durch einen Dienstleister erfolgen, der an all denjenigen Standorten ein Bekämpfungsmittel ausbringt, an denen die Schadschwelle überschritten ist. Auch der Einsatz von Drohnen oder Robotern oder autonomen Landmaschinen zum Ausbringen des Bekämpfungsmittels ist denkbar.

Eine bevorzugte Ausführungsform der vorliegenden Erfindung ist damit ein System, umfassend
- eine Mehrzahl an Bildaufnahmevorrichtungen an verschiedenen Standorten in einem Gebiet, wobei die Mehrzahl an Bildaufnahmevorrichtungen auf unterschiedliche Nutzer registriert ist,
- wobei jede Bildaufnahmevorrichtung
   o einen Sammelbereich,
   o eine Bildaufnahmeeinheit,
   o eine Sendeeinheit, und
   o eine Steuereinheit
   umfasst,
   wobei die Steuereinheit jeder Bildaufnahmevorrichtung konfiguriert ist,
   ▪ die Bildaufnahmeeinheit zu veranlassen, Bildaufnahmen von dem Sammelbereich zu erzeugen, und
   ▪ die Sendeeinheit zu veranlassen, die Bildaufnahmen und/oder Informationen zu den Bildaufnahmen über ein Netzwerk an ein Computersystem zu versenden,
- das Computersystem, das konfiguriert ist,
   - die Bildaufnahmen und/oder die Informationen zu den Bildaufnahmen zu empfangen,
   - die Bildaufnahmen und/oder die Informationen zu den Bildaufnahmen zu analysieren, wobei Informationen über die an den verschiedenen Standorten vorhandenen (spezifischen) Schädlinge gewonnen werden,
   - für jeden Standort der verschiedenen Standorte eine Befallsdichte in Bezug auf einen (spezifischen) Schädling zu berechnen,
   - Standorte zu identifizieren, an denen eine Schadschwelle in Bezug auf den (spezifischen) Schädling überschritten ist,
   - eine konzertierte Applikation eines Bekämpfungsmittels an all denjenigen Standorten zu initiieren, an denen die Schadschwelle überschritten ist.

Die Initiierung der Applikation eines Bekämpfungsmittels kann auf verschiedenen Weisen erfolgen:
- Identifizieren derjenigen Nutzer, auf denen ein Bekämpfungsmittel registriert ist, das sich an einem Standort befindet, für den eine Schadschwelle überschritten ist und Übermitteln eine Mitteilung an diese Nutzer, wobei die Mitteilung eine Empfehlung für ein Bekämpfungsmittel umfasst sowie einen Zeitpunkt und/oder eine Zeitspanne, zu dem / in der das Bekämpfungsmittel appliziert werden soll.
- Erzeugen einer Applikationskarte, wobei die Applikationskarte Teilgebiete spezifiziert, wobei die Teilgebiete Standorte umfassen, an denen eine Schadschwelle überschritten ist, wobei die Applikationskarte Informationen umfasst, zu welchem Zeitpunkt / in welchem Zeitraum ein oder mehrere Bekämpfungsmittel gegen den (spezifischen) Schädling in den spezifizierten Teilgebieten appliziert werden sollen und Übermitteln der Applikationskarte an einen Dienstleister zum Ausbringen von Bekämpfungsmitteln oder an eine Maschine (Drohne, Roboter, Landmaschine) zum Ausbringen von Bekämpfungsmitteln.

Eine bevorzugtes Verfahren ist entsprechend durch die folgenden Schritte gekennzeichnet:
- Aufstellen einer Mehrzahl an Bildaufnahmevorrichtungen an verschiedenen Standorten in einem Gebiet, wobei die Mehrzahl an Bildaufnahmevorrichtungen auf unterschiedliche Nutzer registriert ist,
   ▪ wobei jede Bildaufnahmevorrichtung einen Sammelbereich, eine Bildaufnahmeeinheit, eine Sendeeinheit und eine Steuereinheit umfasst,
- Erzeugen von Bildaufnahmen von den Sammelbereichen an den verschiedenen Standorten,
- Analysieren der Bildaufnahmen, wobei Informationen über die an den verschiedenen Standorten vorhandenen (spezifischen) Schädlinge gewonnen werden,
- für jeden Standort der verschiedenen Standorte Berechnen einer Befallsdichte in Bezug auf einen (spezifischen) Schädling,
- Identifizieren der Standorte, an denen eine Schadschwelle in Bezug auf den (spezifischen) Schädling überschritten ist,
- Initiieren einer konzertierten Applikation eines Bekämpfungsmittels an all denjenigen Standorten, an denen die Schadschwelle überschritten ist.

Ein weiterer Gegenstand der vorliegenden Erfindung ist ein Computerprogrammprodukt. Das entsprechende Computerprogramm ist üblicherweise auf dem Computersystem des Endnutzers installiert und gestattet ihm eine Befallskontrolle aus der Ferne.

In einer Ausführungsform der vorliegenden Erfindung ist das Computerprogramm so konfiguriert, dass es die Informationen, die die mindestens eine erfindungsgemäße Vorrichtung (direkt oder über einen dazwischengeschalteten Server) liefert, für den Nutzer bereitstellt. Der Nutzer erhält mit dem Computerprogramm einen Überblick über diejenigen Vorrichtungen, die ihm zugeordnet sind. Die Zuordnung kann beispielsweise dadurch erfolgen, dass jede Vorrichtung eine einzigartige Kennung (z.B. eine Identifikationsnummer) aufweist, die der Nutzer manuell über eine Tastatur oder per Sprachbefehl über ein Mikro oder ein anderes Eingabegerät in das Computerprogramm eingibt. Denkbar ist auch, dass die Kennung als optisch lesbarer Code (z.B. als Strichcode oder Matrixcode (QR-Code, DataMatrix-Code oder dergleichen)) auf der Vorrichtung vorhanden ist und mit einem entsprechenden Lesegerät (Strichcode-Scanner, Kamera) ausgelesen und in das Computerprogramm übertragen werden kann. Auch die Verwendung eines RFID-Tags oder die Übertragung einer Kennung aus einem Permanentspeicher der Vorrichtung per Bluetooth oder Nearfield-Kommunikation oder über eine W-LAN-Verbindung oder dergleichen ist denkbar.

Vorzugsweise lässt sich mit dem Computerprogramm eine geografische Karte aufrufen, in der der Standort der einem Nutzer zugeordneten Vorrichtungen verzeichnet ist. Es ist denkbar, dass dieser Standort über einen GPS-Sensor, der Bestandteil der Vorrichtung sein kann, bestimmt wird. Es ist aber auch denkbar, dass es sich um einen Standort handelt, der der Funkzelle, in der sich die Vorrichtung befindet, zugeordnet ist (zum Beispiel der Standort einer Basisstation).

Durch Auswählen einer Vorrichtung (zum Beispiel durch Eingabe von Kenndaten oder die Auswahl aus einem virtuellen Menü oder Anklicken eines Standortes oder dergleichen) kann der Nutzer Informationen zu der jeweiligen Vorrichtung abrufen. Er kann beispielsweise die Zahl der in der Vorrichtung zu verschiedenen Zeitpunkten vorhandenen Schädlinge/Nützlinge abrufen. Er kann die zu verschiedenen Zeitpunkten erzeugten Bildaufnahmen anzeigen lassen. Er kann die in einer Bildaufnahme erkannten Spezies anzeigen lassen. Er kann in einer Bildaufnahme anzeigen lassen, welche Spezies erkannt worden sind und welche nicht.

In einer bevorzugten Ausführungsform zeigt das Computerprogramm den Nutzer eine Vorhersage für die Ausbreitung einer oder mehrerer Schädlingsspezies an. Vorzugsweise erfolgt diese Anzeige in Form einer geografischen Karte, in der farblich kodiert ist, aus welcher Richtung sich eine Schädlingsspezies ausbreitet, mit welcher Geschwindigkeit sie sich ausbreitet und/oder ob eine Schadschwelle überschritten ist oder nicht.

Weitere Ausführungsformen der vorliegenden Erfindung sind:
1. Ein System umfassend:
   - eine Mehrzahl an Bildaufnahmevorrichtungen in einem Gebiet, wobei jede Bildaufnahmevorrichtung
      o einen Sammelbereich,
      o eine Bildaufnahmeeinheit,
      o eine Sendeeinheit und
      o eine Steuereinheit
      umfasst, wobei die Steuereinheit konfiguriert ist,
      ▪ die Bildaufnahmeeinheit zu veranlassen, Bildaufnahmen von dem Sammelbereich zu erzeugen, und
      ▪ die Sendeeinheit zu veranlassen, Informationen betreffend die Bildaufnahmen über ein Netzwerk an ein Computersystem zu versenden,
   - das Computersystem, das konfiguriert ist,
      - die Informationen betreffend die Bildaufnahmen von der Mehrzahl an Bildaufnahmevorrichtungen zu empfangen,
      - die empfangenen Informationen zu analysieren, wobei Informationen zu den in einem Teilgebiet vorhandenen Schädlingen und/oder Nützlingen gewonnen werden,
      - die Informationen zu den in einem Teilgebiet vorhandenen Schädlingen und/oder Nützlingen einem oder mehreren Nutzern zu übermitteln.
2. Das System gemäß der Ausführungsform 1, wobei
   - die Steuereinheit konfiguriert ist, die Sendeeinheit zu veranlassen, die erzeugten Bildaufnahmen an das Computersystem zu versenden,
   - das Computersystem konfiguriert ist,
      - die versandten Bildaufnahmen zu empfangen,
      - die empfangenen Bildaufnahmen von Bildaufnahmevorrichtungen des Teilgebietes zu analysieren, wobei Schädlinge und/oder Nützlinge identifiziert werden und für mindestens eine Schädlingsspezies und/oder mindestens eine Nützlingsspezies eine Flächendichte für das Teilgebiet berechnet wird,
      - die mindestens eine berechnete Flächendichte einem Nutzer zu übermitteln.
3. Das System gemäß der Ausführungsform 2, wobei
   - das Computersystem konfiguriert ist,
      - die empfangenen Bildaufnahmen von Bildaufnahmevorrichtungen des Teilgebietes zu analysieren, wobei für mindestens eine Schädlingsspezies ermittelt wird, ob eine Schadschwelle überschritten ist, wobei für die Ermittlung der Information, ob eine Schadschwelle überschritten ist, die Zahl der Nützlinge,
      denen die Schädlingsspezies an Nahrungsquelle oder Wirt dienen, berücksichtigt wird,
      - die ermittelte Information, ob eine Schadschwelle überschritten ist, an einen Nutzer zu übermitteln.
4. Das System gemäß der Ausführungsform 1, ferner umfassend
   - mindestens eine Pflanzenanalysevorrichtung in einem Teilgebiet, wobei die mindestens eine Pflanzenanalysevorrichtung
      o eine Bildaufnahmeeinheit,
      o eine Sendeeinheit, und eine
      o eine Steuereinheit
      umfasst,
      wobei die Steuereinheit konfiguriert ist,
      ▪ die Bildaufnahmeeinheit zu veranlassen, Bildaufnahmen von Pflanzen oder Pflanzenteilen, die in dem Teilgebiet angebaut sind, zu erzeugen, und
      ▪ die Sendeeinheit zu veranlassen, die erzeugten Bildaufnahmen über ein Netzwerk an ein Computersystem zu versenden,
   - das Computersystem, das konfiguriert ist,
      - die versandten Bildaufnahmen zu empfangen,
      - die empfangenen Bildaufnahmen zu analysieren, wobei der Entwicklungsstatus der Pflanzen und/oder die Art und/oder die Schwere von Schäden an den Pflanzen oder Pflanzenteilen durch Schädlinge und/oder der Gesundheitszustand der Pflanzen ermittelt wird,
      - den Entwicklungsstatus der Pflanzen und/oder die Art und/oder die Schwere von Schäden an den Pflanzen oder Pflanzenteilen durch Schädlinge und/oder den Gesundheitszustand der Pflanzen einem Nutzer zu übermitteln
5. Das System gemäß der Ausführungsform 4, wobei
   - das Computersystem konfiguriert ist,
      - die von den Bildaufnahmevorrichtungen des Teilgebiets versandten Bildaufnahmen zu empfangen,
      - die empfangenen Bildaufnahmen zu analysieren, wobei Schädlinge identifiziert werden, wobei für mindestens eine Schädlingsspezies ermittelt wird, ob eine Schadschwelle überschritten ist, wobei für die Ermittlung der Information, ob eine Schadschwelle überschritten ist, der Entwicklungsstatus der Pflanzen und/oder die Art und/oder die Schwere von Schäden an den Pflanzen oder Pflanzenteilen durch Schädlinge und/oder der Gesundheitszustand der Pflanzen berücksichtigt wird,
      - die ermittelte Information, ob eine Schadschwelle überschritten ist, an einen Nutzer zu übermitteln.
6. Das System gemäß der Ausführungsform 5, wobei
   - das Computersystem konfiguriert ist,
      - die von den Bildaufnahmevorrichtungen des Teilgebiets versandten Bildaufnahmen zu empfangen,
      - die empfangenen Bildaufnahmen zu analysieren, wobei eine Zahl an Nützlingen identifiziert wird, wobei mindestens eine Schädlingsspezies den Nützlingen als Nahrungsquelle oder Wirt dient, wobei für die Ermittlung der Information, ob eine Schadschwelle überschritten ist, die Zahl der Nützlinge, denen die mindestens eine Schädlingsspezies als Nahrungsquelle oder Wirt dient, berücksichtigt wird,
      - die ermittelte Information, ob eine Schadschwelle überschritten ist, an einen Nutzer zu übermitteln.
7. Das System gemäß einer der Ausführungsformen 1 bis 6, wobei
   - das Computersystem konfiguriert ist,
      - die empfangenen Bildaufnahmen zu analysieren, wobei eine Ausbreitungsrichtung mindestens einer Schädlingsspezies und eine Ausbreitungsgeschwindigkeit der mindestens einen Schädlingsspezies ermittelt wird,
      - die Ausbreitungsrichtung und die Ausbreitungsgeschwindigkeit einem oder mehreren Nutzern zu übermitteln.
8. Das System gemäß der Ausführungsform 7, wobei
   - das Computersystem konfiguriert ist,
      - für ein oder mehrere Teilgebiete eine Vorhersage für die Ausbreitung mindestens einer Schädlingsspezies für einen zukünftigen Zeitraum zu erzeugen,
      - die Vorhersage einem oder mehreren Nutzern zu übermitteln.
9. Das System gemäß der Ausführungsform 8, wobei in die Vorhersage Wetterdaten einfließen.
10. Das System gemäß einer der Ausführungsformen 1 bis 9, wobei die Bildaufnahmevorrichtungen und/oder die mindestens eine Pflanzenanalysevorrichtung eine Halterung umfasst, mit der die Bildaufnahmeeinheit in einem definierten Abstand über dem Boden positioniert wird kann, wobei der Abstand variabel ist.
11. Das System gemäß einer der Ausführungsformen 1 bis 10, wobei die Bildaufnahmevorrichtungen Mittel zur automatisierten Reinigung des Sammelbereichs umfasst.
12. Das System gemäß einer der Ausführungsformen 1 bis 11, wobei eine oder mehrere Bildaufnahmevorrichtungen eine Barriere umfassen, die eine Verschmutzung des Sammelbereichs durch Pflanzenteile verhindert.
13. Ein Verfahren umfassend die Schritte
   - Aufstellen einer Mehrzahl an Bildaufnahmevorrichtungen in einem Gebiet, wobei jede Bildaufnahmevorrichtung
      o einen Sammelbereich,
      o eine Bildaufnahmeeinheit,
      o eine Sendeeinheit und
      o eine Steuereinheit
      umfasst,
   - Erzeugen von Bildaufnahmen des Sammelbereichs jeder Bildaufnahmevorrichtung,
   - Übermitteln von Informationen betreffend die Bildaufnahmen an ein Computersystem,
   - Analysieren der übermittelten Informationen und Generieren von Informationen zu den in einem Teilgebiet vorhandenen Schädlingen und/oder Nützlingen,
   - Übermitteln der Informationen zu den in einem Teilgebiet vorhandenen Schädlingen und/oder Nützlingen an einen oder mehrere Nutzer.
14. Ein Computerprogrammprodukt umfassend ein Computerprogramm, das in einen Arbeitsspeicher eines Computers geladen werden kann und dort den Computer dazu veranlasst, folgende Schritte ausführen:
   - Empfangen von Informationen von einer Mehrzahl an Bildaufnahmevorrichtungen in einem Gebiet, wobei die Informationen von jeder Bildaufnahmevorrichtung Bildaufnahmen betreffen, die von einem Sammelbereich der Bildaufnahmevorrichtung erzeugt worden sind,
   - Analysieren der empfangenen Informationen und Generieren von Informationen zu den in einem Teilgebiet vorhandenen Schädlingen und/oder Nützlingen,
   - Übermitteln der Informationen zu den in einem Teilgebiet vorhandenen Schädlingen und/oder Nützlingen an einen oder mehrere Nutzer.

Die Erfindung wird nachstehend anhand von Figuren und Beispielen näher erläutert, ohne die Erfindung auf die in den Figuren und Beispielen genannten Merkmale und Merkmalskombinationen beschränken zu wollen.

### Es zeigen:

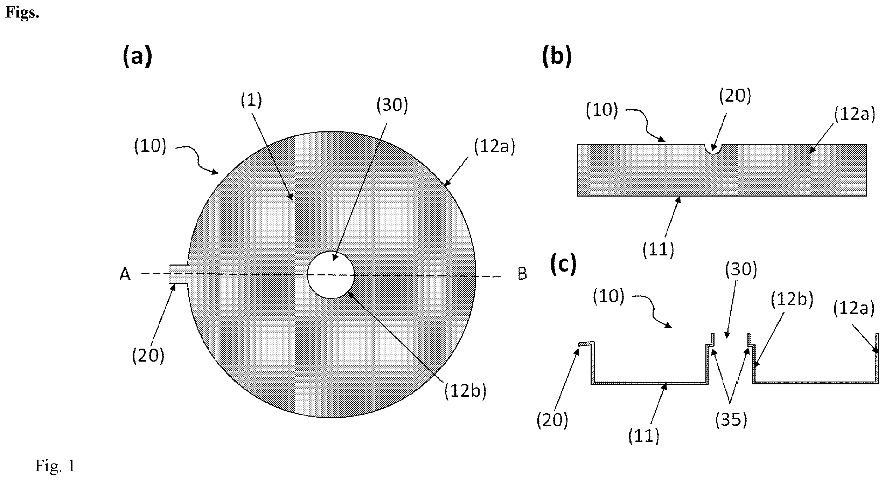

Figur 1 zeigt schematisch einen Behälter (10), der einen Sammelbereich (1) für Schädlinge und/oder Nützlinge bereitstellt.

Figur 1a zeigt den Behälter (10) in einer Aufsicht. Figur 1b zeigt den Behälter (10) in einer Seitenansicht aus Richtung des Punkts A (siehe Fig. 1a). Figur 1c zeigt den Behälter (10) von der Seite im Querschnitt entlang der gestrichelten Linie A-B (siehe Fig. 1a).

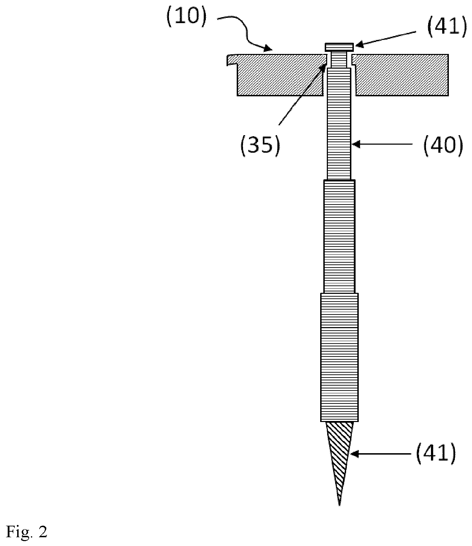

Der Behälter (10) weist eine Zylinderform mit einem runden Querschnitt auf. Unten ist der Zylinder durch einen Boden (11) geschlossen, nach oben ist er geöffnet. Der Boden (11) und zwei in sich geschlossene, runde Seitenwände (12a, 12b), die sich senkrecht zum Boden (11) erstrecken, bilden einen Raum zur Aufnahme einer Flüssigkeit. Von oben betrachtet man den Sammelbereich (1). In der Mitte des Behälters (10) ist eine kreisförmige Aussparung (30) eingebracht, die durch die Seitenwand (12b) eingegrenzt wird. Die Aussparung verjüngt sich nach oben hin; wobei ein Ring (35) entsteht, der als Auflagefläche für eine Halterung (siehe Fig. 2) dienen kann. An der Seite ist eine halbkreisförmige Aussparung in der Seitenwand (12a) eingebracht, an der eine Rinne (20) nach außen weist. Über diese Rinne kann Regenwasser, das in den Behälter (10) gelangt, abfließen.

Figur 2 zeigt den in Fig. 1 dargestellten Behälter (10) zusammen mit einer Teleskopstange (40), an der der Behälter befestigt ist, im Querschnitt. Mit Hilfe der Teleskopstange kann der Abstand zwischen dem Sammelbereich (1) und dem Boden variiert werden. Der Behälter ruht mit dem Ring (35) auf der Teleskopstange (41). Die Teleskopstange (41) weist im oberen Bereich ein Innengewinde auf (in der Figur nicht dargestellt), in der eine Schraube (41) eingedreht ist, mit der der Behälter (10) und die Teleskopstange (40) miteinander verklemmt werden. Im unteren Bereich weist die Teleskopstange (40) eine Spitze (41) auf, die in einen Erdboden gerammt werden kann. Es ist denkbar, andere Vorrichtungen zum Aufstellen des Behälters (10) vorzusehen, wie beispielsweise ein Schraubgewinde zum Einbohren in den Boden oder ein Dreibein. Weitere Möglichkeiten sind denkbar.

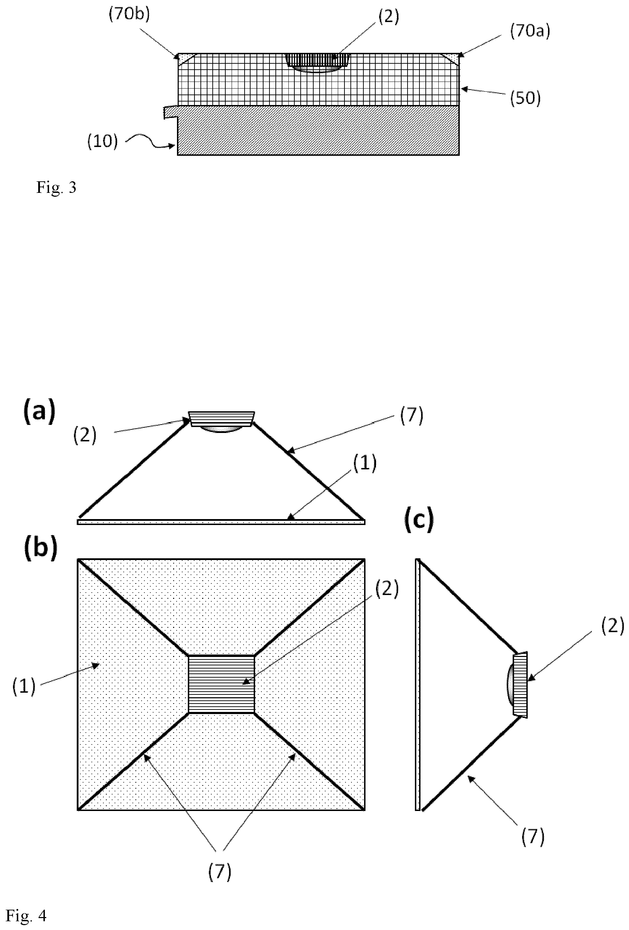

Figur 3 zeigt den in Fig. 1b dargestellten Behälter (10), über den ein Käfig (50) angebracht ist. Dabei ist der Gitterabstand so dimensioniert, dass keine Blätter in den Behälter gelangen. Am Kopf des Gitters (50) ist die Bildaufnahmeeinheit (2) angebracht. Sie befindet sich innerhalb des Käfigs. Zwei Beleuchtungseinheiten (70a, 70b) sorgen für eine definierte Ausleuchtung des Sammelbereichs.

Figur 4 zeigt schematisch eine Tafel, die einen Sammelbereich (1) bereitstellt. Figur 4a zeigt die Tafel in einer Seitenansicht. Figur 1b zeigt die Tafel in der Aufsicht. Figur 1c zeigt die Karte in einer weiteren Seitenansicht. An der Karte sind Haltestäbe (7) angebracht, an deren Ende eine Bildaufnahmeeinheit befestigt ist.

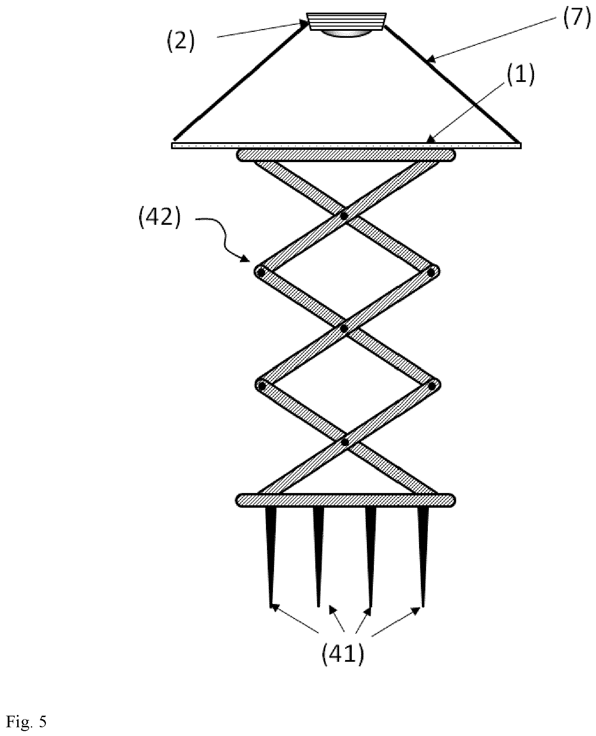

Figur 5 zeigt die in Figur 4a dargestellte Tafel, die an einer Hebebühne (42) angebracht ist. Die Hebebühne (42) weist um unteren Bereich Spitzen (41) auf, mit denen die Hebebühne in einem Boden befestigt werden kann.

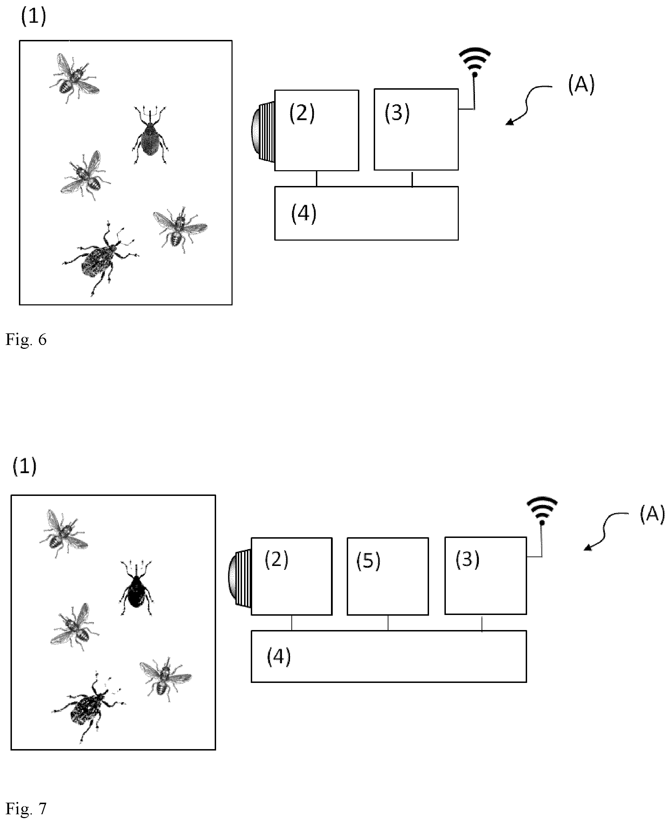

Figur 6 zeigt schematisch eine Ausführungsform der erfindungsgemäßen Bildaufnahmevorrichtung (A). Die Bildaufnahmevorrichtung (A) umfasst einen Sammelbereich (1), eine Bildaufnahmeeinheit (2), eine Sendeeinheit (3) und eine Steuereinheit (4).

Figur 7 zeigt schematisch eine weitere Ausführungsform der erfindungsgemäßen Bildaufnahmevorrichtung (A). Die Bildaufnahmevorrichtung (A) umfasst einen Sammelbereich (1), eine Bildaufnahmeeinheit (2), eine Sendeeinheit (3), eine Steuereinheit (4) und eine Auswerteinheit (5).

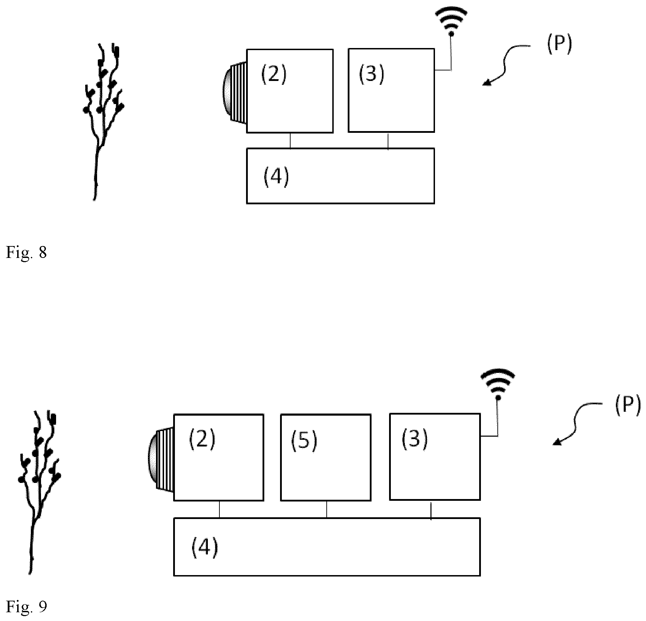

Figur 8 zeigt schematisch eine Ausführungsform der erfindungsgemäßen Pflanzenanalysevorrichtung (P). Die Pflanzenanalysevorrichtung (P) umfasst eine Bildaufnahmeeinheit (2), eine Sendeeinheit (3) und eine Steuereinheit (4).

Figur 9 zeigt schematisch eine weitere Ausführungsform der erfindungsgemäßen Pflanzenanalysevorrichtung (P). Die Pflanzenanalysevorrichtung (P) umfasst eine Bildaufnahmeeinheit (2), eine Sendeeinheit (3), eine Steuereinheit (4) und eine Auswerteinheit (5).

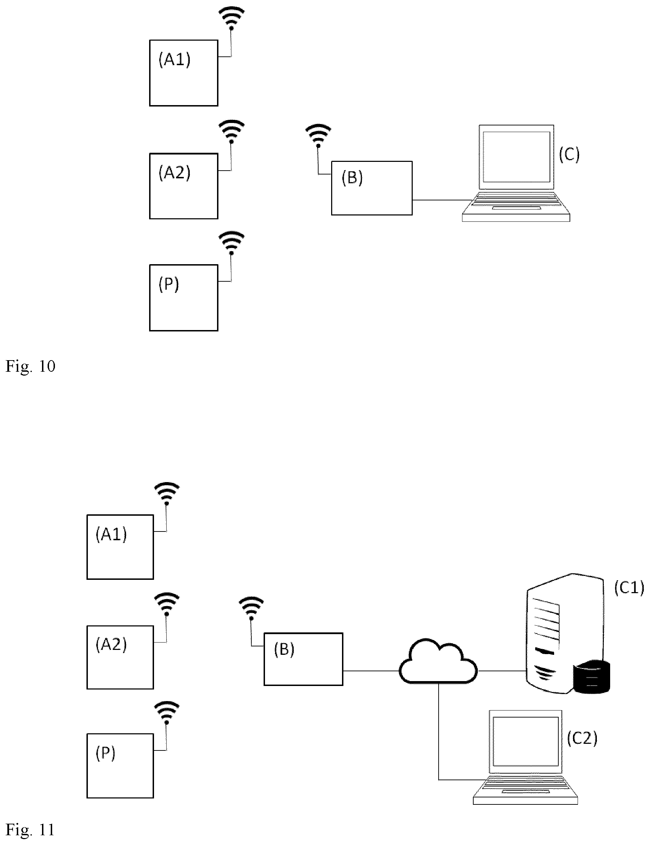

Figur 10 zeigt schematisch eine Ausführungsform des erfindungsgemäßen Systems. Das System umfasst eine Mehrzahl an Vorrichtungen (A1, A2, P), die Bildaufnahmen erzeugen. Informationen betreffend die Bildaufnahmen werden über ein Funknetz an eine Basisstation (B) übermittelt. Von dort werden sie über ein Netzwerk an ein Computersystem (C) übermittelt.

Figur 11 zeigt schematisch eine weitere Ausführungsform des erfindungsgemäßen Systems. Das System umfasst eine Mehrzahl an Vorrichtungen (A1, A2, P), die Bildaufnahmen erzeugen. Informationen betreffend die Bildaufnahmen werden über ein Funknetz an eine Basisstation (B) übermittelt. Von dort werden sie über ein Netzwerk (dargestellt durch die Cloud) an ein Computersystem (C1) übermittelt. Informationen betreffend die Bildaufnahmen können mittels des Computersystems (C2) von dem Computersystem (C1) abgerufen werden.

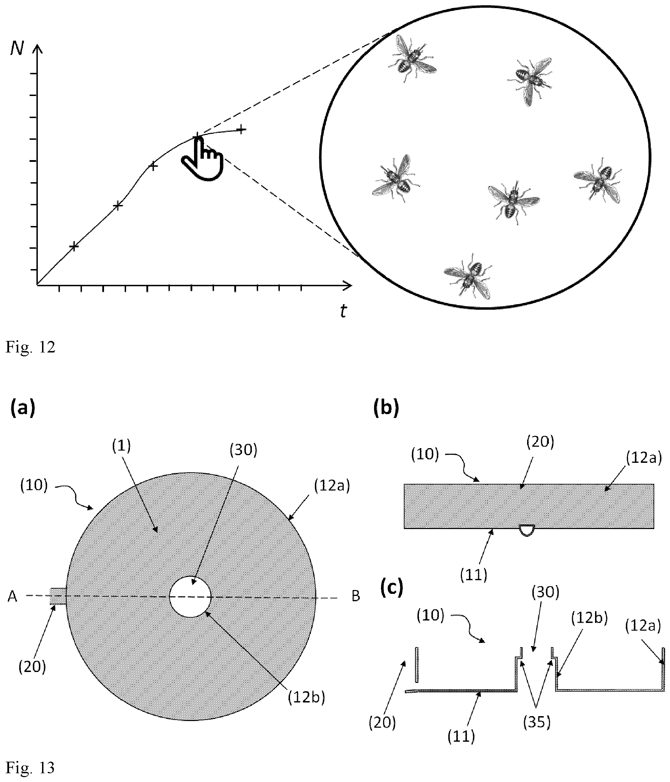

Figur 12 zeigt schematisch eine Darstellung des erfindungsgemäßen Computerprogramms. Es ist die Zahl *N* der zu definierten Zeitpunkt *t* in Bildaufnahmen automatisiert gezählten Spezies grafisch dargestellt. Durch Anklicken eines Datenpunktes wird die dazugehörige Bildaufnahme angezeigt.

Figur 13 zeigt schematisch einen Behälter (10), der einen Sammelbereich (1) für Schädlinge und/oder Nützlinge bereitstellt. Figur 13(a) zeigt den Behälter (10) in einer Aufsicht. Figur 13(b) zeigt den Behälter (10) in einer Seitenansicht aus Richtung des Punkts A (siehe Fig. 13(a)). Figur 13(c) zeigt den Behälter (10) von der Seite im Querschnitt entlang der gestrichelten Linie A-B (siehe Fig. 13(a)). Der Behälter (10) weist eine Zylinderform mit einem runden Querschnitt auf. Nach unten ist der Zylinder durch einen Boden (11) geschlossen, nach oben ist er offen. Der Boden (11) und zwei in sich geschlossene, runde Seitenwände (12a, 12b), die sich senkrecht zum Boden (11) erstrecken, bilden einen Raum. Von oben betrachtet man den Sammelbereich (1). In der Mitte des Behälters (10) ist eine kreisförmige Aussparung (30) eingebracht, die durch die Seitenwand (12b) eingegrenzt wird. Die Aussparung verjüngt sich nach oben hin; wobei ein Ring (35) entsteht, der als Auflagefläche für eine Halterung dienen kann. In die Seitenwand (12a) des Behälters (10) ist an einer Stelle eine halbkreisförmige Aussparung eingebracht, an der eine Rinne (20) nach außen weist. Über diese Rinne kann Regenwasser, das in den Behälter (10) gelangt, abfließen.

## Patentansprüche

1. Bildaufnahmevorrichtung umfassend
- einen Sammelbereich,
- eine Bildaufnahmeeinheit,
- eine Sendeeinheit und
- eine Steuereinheit
wobei die Steuereinheit konfiguriert ist,
▪ die Bildaufnahmeeinheit zu veranlassen, Bildaufnahmen von dem Sammelbereich zu erzeugen, und
▪ die Sendeeinheit zu veranlassen, die erzeugten Bildaufnahmen und/oder Informationen zu den erzeugten Bildaufnahmen über ein Netzwerk an ein Computersystem zu versenden.

2. Bildaufnahmevorrichtung gemäß Anspruch 1, **dadurch gekennzeichnet, dass** der Sammelbereich keine Mittel zur Immobilisierung und/oder zum Fangen von Gliederfüßern aufweist.

3. Bildaufnahmevorrichtung gemäß einem der Ansprüche 1 oder 2, wobei der Sammelbereich durch eine Fläche gebildet wird, die mindestens eine Öffnung aufweist, über die Regenwasser aus dem Sammelbereich ablaufen kann.

4. Bildaufnahmevorrichtung gemäß einem der Ansprüche 1 bis 3, wobei an die mindestens eine Öffnung eine Ablaufrinne angrenzt, über die Regenwasser gerichtet abfließen kann.

5. Bildaufnahmevorrichtung gemäß einem der Ansprüche 1 bis 4, die in einem Gebiet stationiert ist, wobei der Sammelbereich durch eine ebene Fläche gebildet wird, die gegenüber dem Horizont eine Neigung im Bereich von 5° bis 80° aufweist.

6. Bildaufnahmevorrichtung gemäß einem der Ansprüche 1 bis 5, ferner umfassend Mittel zur automatisierten Reinigung des Sammelbereichs.

7. Bildaufnahmevorrichtung gemäß einem der Ansprüche 1 bis 6, ferner umfassend eine Halterung, mit der die Bildaufnahmevorrichtung in einem definierten Abstand über den Erdboden positioniert werden kann, wobei der Abstand variabel gestaltet werden kann.

8. Bildaufnahmevorrichtung gemäß Anspruch 7, ferner umfassend eine Höhenverstelleinheit, die so konfiguriert ist, dass sie die Höhe des Sammelbereichs über dem Erdboden automatisiert auf einen definierten Wert einstellt.

9. Bildaufnahmevorrichtung gemäß einem der Ansprüche 1 bis 8, **dadurch gekennzeichnet, dass** der Sammelbereich durch ein Netz oder Gitter von der Außenwelt getrennt ist.

10. Bildaufnahmevorrichtung gemäß einem der Ansprüche 1 bis 9, ferner umfassend mindestens eine Beleuchtungsquelle, wobei die mindestens eine Beleuchtungsquelle so auf den Sammelbereich gerichtet ist, dass
elektromagnetische Strahlung auf den Sammelbereich trifft und zumindest ein Teil der elektromagnetischen Strahlung von dem Sammelbereich in Richtung der Bildaufnahmeeinheit gestreut wird.

11. Bildaufnahmevorrichtung gemäß einem der Ansprüche 1 bis 10, ferner umfassend mindestens Anwesenheitssensor,
wobei der Anwesenheitssensor konfiguriert ist,
• eine physikalische Eigenschaft in seiner Umgebung zu erfassen, die mit der Wahrscheinlichkeit der Anwesenheit eines Gliederfüßers im Sammelbereich korreliert, und
• die erfasste Eigenschaft in ein Signal umzuwandeln,
wobei die Steuereinheit konfiguriert ist,
• die Bildaufnahmeeinheit zu veranlassen, Bildaufnahmen von dem Sammelbereich zu erzeugen, und
• die Sendeeinheit zu veranlassen, die Bildaufnahmen und/oder Informationen zu den Bildaufnahmen über ein Netzwerk an ein Computersystem zu versenden wobei die Steuereinheit konfiguriert ist,
• die Zeitpunkte und/oder die zeitliche Häufigkeit, zu denen / in der die Bildaufnahmen erzeugt werden und/oder zu denen / in der die Bildaufnahmen und/oder Informationen zu den Bildaufnahmen über das Netzwerk an das Computersystem versandt werden, auf Basis des Signals des Anwesenheitssensors festzusetzen.

12. System umfassend:
- eine Mehrzahl an Bildaufnahmevorrichtungen in einem Gebiet, wobei jede Bildaufnahmevorrichtung
o einen Sammelbereich,
o eine Bildaufnahmeeinheit,
o eine Sendeeinheit und
o eine Steuereinheit
umfasst,
wobei die Steuereinheit konfiguriert ist,
▪ die Bildaufnahmeeinheit zu veranlassen, Bildaufnahmen von dem Sammelbereich zu erzeugen, und
▪ die Sendeeinheit zu veranlassen, Informationen betreffend die Bildaufnahmen über ein Netzwerk an ein Computersystem zu versenden,
- das Computersystem, das konfiguriert ist,
• die Informationen betreffend die Bildaufnahmen von der Mehrzahl an Bildaufnahmevorrichtungen zu empfangen,
• die empfangenen Informationen zu analysieren, wobei Informationen zu den in einem Teilgebiet vorhandenen Schädlingen und/oder Nützlingen gewonnen werden,
• die Informationen zu den in einem Teilgebiet vorhandenen Schädlingen und/oder Nützlingen einem Nutzer oder mehreren Nutzern zu übermitteln.

13. System gemäß Anspruch 12, wobei es sich bei der Mehrzahl an Bildaufnahmevorrichtungen um eine Mehrzahl an Bildaufnahmevorrichtungen gemäß einem der Ansprüche 1 bis 11 handelt.

14. Verfahren umfassend die Schritte
- Aufstellen einer Mehrzahl an Bildaufnahmevorrichtungen in einem Gebiet, wobei jede Bildaufnahmevorrichtung
o einen Sammelbereich,
o eine Bildaufnahmeeinheit,
o eine Sendeeinheit und eine
o eine Steuereinheit
umfasst,
- Erzeugen von Bildaufnahmen des Sammelbereichs jeder Bildaufnahmevorrichtung,
- Übermitteln von Informationen betreffend die Bildaufnahmen an ein Computersystem,
- Analysieren der übermittelten Informationen und Generieren von Informationen zu den in einem Teilgebiet vorhandenen Schädlingen und/oder Nützlingen,
- Übermitteln der Informationen zu den in einem Teilgebiet vorhandenen Schädlingen und/oder
o Nützlingen an einen oder mehrere Nutzer.

15. Computerprogrammprodukt umfassend ein Computerprogramm, das in einen Arbeitsspeicher eines Computers geladen werden kann und dort den Computer dazu veranlasst, folgende Schritte ausführen:
- Empfangen von Informationen von einer Mehrzahl an Bildaufnahmevorrichtungen in einem Gebiet, wobei die Informationen von jeder Bildaufnahmevorrichtung Bildaufnahmen betreffen, die von einem Sammelbereich der Bildaufnahmevorrichtung erzeugt worden sind,
- Analysieren der empfangenen Informationen und Generieren von Informationen zu den in einem Teilgebiet vorhandenen Schädlingen und/oder Nützlingen,
- Übermitteln der Informationen zu den in einem Teilgebiet vorhandenen Schädlingen und/oder Nützlingen an einen oder mehrere Nutzer.
